(19) **Europäisches Patentamt / European Patent Office / Office européen des brevets**

(11) **EP 1 565 950 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(21) Anmeldenummer: **03775310.0**

(22) Anmeldetag: **06.11.2003**

(51) Int Cl.:
***H01M 2/16*** *(2006.01)*

(86) Internationale Anmeldenummer:
**PCT/EP2003/012384**

(87) Internationale Veröffentlichungsnummer:
**WO 2004/049471 (10.06.2004 Gazette 2004/24)**

(54) **SEPARATOR MIT ASYMMETRISCHEM PORENGEFÜGE FÜR EINE ELEKTROCHEMISCHE ZELLE**

SEPARATOR PROVIDED WITH ASYMMETRICAL PORE STRUCTURES FOR AN ELECTROCHEMICAL CELL

SEPARATEUR A STRUCTURE POREUSE ASYMETRIQUE POUR UNE CELLULE ELECTROCHIMIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **26.11.2002 DE 10255121**

(43) Veröffentlichungstag der Anmeldung:
**24.08.2005 Patentblatt 2005/34**

(73) Patentinhaber: **Evonik Degussa GmbH**
**45128 Essen (DE)**

(72) Erfinder:
- **HENNIGE, Volker**
  **48249 Dülmen (DE)**
- **HYING, Christian**
  **46414 Rhede (DE)**

- **HÖRPEL, Gerhard**
  **48301 Nottuln (DE)**
- **NOVAK, Petr**
  **CH-5200 Brugg AG (CH)**
- **VETTER, Jens**
  **CH-5303 Würenlingen (CH)**

(74) Vertreter: **Tostmann, Holger Carl**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**DE-A- 19 912 644      DE-A1- 10 115 927**
**DE-A1- 10 115 928      DE-C- 19 838 800**

**Beschreibung**

Die vorliegende Erfindung betrifft einen Separator für eine elektrochemische Zelle, ein Verfahren zur Herstellung eines solchen Separators sowie eine elektro-chemische Zelle, die einen solchen Separator umfasst.

Unter elektrochemischer Zelle oder Batterie sind in dieser Beschreibung Batterien und Akkumulatoren (Sekundärbatterien) jeder Art zu verstehen, insbesondere Alkali-, wie z. B. Lithium-, Lithiumionen-, Lithium-Polymer-, und Erdalkali-Batterien und -Akkumulatoren und zwar auch in Form von Hochenergie- oder Hochleistungssystemen.

Elektrochemische Zellen umfassen gegenpolige Elektroden, die durch einen Separator unter Aufrechterhaltung von Ionenleitfähigkeit, voneinander separiert sind.

Herkömmlicherweise ist ein Separator ein dünner, poröser, elektrisch isolierender Stoff mit hoher Ionendurchlässigkeit, guter mechanischer Festigkeit und Langzeitstabilität gegen die im System, z. B. im Elektrolyten der elektrochemischen Zelle, verwendeten Chemikalien und Lösemittel. Er soll in elektrochemischen Zellen die Kathode von der Anode elektronisch völlig isolieren. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z. B. die einer elektrochemischen Zelle. Die Entwicklung wiederaufladbarer elektrochemischer Zellen oder Batterien wird daher durch die Entwicklung geeigneter Separatormaterialien beeinflusst. Allgemeine Informationen über elektrische Separatoren und Batterien können z. B. bei J. O. Besenhard in "Handbook of Battery Materials" (VCH-Verlag, Weinheim 1999) nachgelesen werden.

Hochenergiebatterien werden in verschiedenen Anwendungen eingesetzt, bei denen es darauf ankommt eine möglichst große Menge an elektrischer Energie verfügbar zu haben. Dies ist beispielsweise bei Traktionsbatterien aber auch bei der Not-Strom-Versorgung mit Batterien (Auxillary Power Systems) der Fall. Die Energiedichte wird dabei häufig in gewichts-[Wh/kg] oder in volumenbezogenen [Wh/L] Größen angegeben. Augenblicklich werden in Hochenergiebatterien Energiedichten von 350 bis 400 Wh/L und von 150 bis 200 Wh/kg erreicht. Die abgefragte Leistung bei solchen Batterien ist nicht so groß, so dass man Kompromisse hinsichtlich des Innenwiderstandes machen kann. Das heißt, dass die Leitfähigkeit des Elektrolyt gefüllten Separators beispielsweise nicht so groß sein muss wie bei Hochleistungsbatterien, so dass dadurch auch andere Separatorkonzepte möglich werden.

So können bei Hochenergiesystemen auch Polymerelektrolyte eingesetzt werden, die mit 0,1 bis 2 mS/cm eine doch recht geringe Leitfähigkeit besitzen. Solche Polymerelektrolytzellen können nicht als Hochleistungsbatterien eingesetzt werden.

Separatormaterialien für die Anwendung in Hochleistungsbatteriesystemen müssen folgende Eigenschaften besitzen:

Sie müssen möglichst dünn sein, um einen geringen spezifischer Platzbedarf zu gewährleisten und um den Innenwiderstand klein zu halten. Um diese geringen Innenwiderstände zu gewährleisten ist es wichtig, dass der Separator auch eine große Porosität aufweist. Ferner müssen sie leicht sein, damit ein geringes spezifisches Gewicht erreicht wird. Außerdem muss die Benetzbarkeit hoch sein, da sonst nicht benetzte Totzonen entstehen.

In vielen, vor allem mobilen Anwendungen werden sehr große Energiemengen benötigt (z. B. in Traktionsbatterien). Die Batterien in diesen Anwendungen speichern im vollgeladenen Zustand also große Energiemengen. Hierfür muss der Separator sicher sein, da in diesen Batterien sehr große spezifische elektrische Energiemengen transportiert werden. Diese Energien dürfen bei einer Fehlfunktion der Batterie bzw. bei einem Unfall nicht unkontrolliert freigesetzt werden, da dies unweigerlich zur Explosion der Zelle unter Feuererscheinung führen würde.

Derzeitig eingesetzte Separatoren bestehen überwiegend aus porösen organischen Polymerfilmen bzw. aus anorganischen Vliesstoffen, wie z. B. Vliesen aus Glas- oder Keramik-Materialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere.

Die Separatoren aus anorganischen Vliesstoffen oder aus Keramikpapier sind mechanisch unbeständig und brechen leicht. Dies führt zu Kurzschlüssen. Denn zum einen können die Elektroden durch gebrochene Stellen leicht in Kontakt kommen. Andererseits wird durch einen gebrochenen Separator das Wachstum von sogenannten Dendriten, d. h. baumartigen Strukturen, von auf der Elektrode abgeschiedenem Material erleichtert, was ebenfalls zu Kurzschlüssen und somit zum Versagen des Separators führt.

Ein typischer organischer Separator besteht z. B. aus Polypropylen oder aus einem Polypropylen/Polyethylen/Polypropylen-Verbund. Ein großer Nachteil dieser organischen Polyolefinseparatoren ist deren relativ geringe thermische Belastbarkeit von unter 150 °C. Schon ein kurz anhaltendes Erreichen des Schmelzpunkts dieser Polymere führt zu einem weitgehendem Schmelzen des Separators und zu einem Kurzschluss in der elektrochemischen Zelle, die einen solchen Separator einsetzt. Der Einsatz solcher Separatoren ist daher generell nicht sehr sicher. Denn beim Erreichen von höheren Temperaturen, insbesondere von mindestens 150 °C oder gar mindestens 180 °C werden diese Separatoren zerstört.

Neben dieser Instabilität bei hohen Temperaturen, weisen die Separatoren auf Polymerbasis weitere schwerwiegende Nachteile hinsichtlich der chemischen Beständigkeit auf. Die Polymere in den elektrochemischen Zellen werden nämlich durch den Kontakt mit den Elektroden auch bei normalen Betriebs- und Lagerungstemperaturen wie Raumtemperatur langsam aber stetig angegriffen. Insbesondere kommt es beim Einsatz solcher Separatoren in elektrochemischen Zellen, die Lithium verwenden, zu Problemen. An der Kontaktfläche des Separators mit dem Lithium bzw. mit dem lithiierten Graphit wird das Polymer langsam angegriffen. Ferner werden die Polymer-Separatoren auch durch die während des Betriebs einer elektrischen Zelle entstehenden Stoffe auch im Inneren des Separators angegriffen. Dadurch können diese Separatoren die Elektroden nicht mehr gesichert vor einem Kurzschluss schützen. Die Standzeit wird dadurch herabgesetzt. Außerdem nimmt die Kapazität einer elektro-chemischen Zelle, die solche Separatoren einsetzt, mit der Zeit ab.

Um diese Nachteile zu überwinden, gab es erste Versuche anorganische Verbundmaterialien als Separatoren einzusetzen. So wird in DE 198 38 800 C1 ein elektrischer Separator mit einer Verbundstruktur vorgeschlagen, der ein flächiges, mit einer Vielzahl von Öffnungen versehenes, flexibles Substrat mit einer darauf befindlichen Beschichtung umfasst. Das Material des Substrates ist ausgewählt aus Metallen, Legierungen, Kunststoffen, Glas und Kohlefaser oder einer Kombination solcher Materialien, und die Beschichtung ist eine flächig durchgehende, poröse, elektrisch nicht leitende keramische Beschichtung. Der Einsatz der keramischen Beschichtung verspricht thermische und chemische Beständigkeit. Die Separatoren, die einen Träger oder ein Substrat aus elektrisch leitendem Material aufweisen (wie im Beispiel angegeben), haben sich allerdings als ungeeignet für Lithium-Ionen-Zellen herausgestellt, da die Beschichtung in der beschriebenen Dicke nicht großflächig fehlerfrei hergestellt werden kann. Somit kommt es sehr leicht zu Kurzschlüssen. Außerdem sind so dünne Metallgewebe, wie sie für sehr dünne Separatoren benötigt werden, kommerziell nicht verfügbar. Die relativ großen Poren weisen eine einheitliche lineare Verteilung auf. Wegen der relativ hohen Dicke der Separatoren von mindestens 100 $\mu$m ergibt sich im Hinblick auf die großen Poren kein Problem im Hinblick auf das Wachstum der sogenannten Dendriten.

In vorangehenden Arbeiten (DE 101 42 622) wurde gezeigt, dass mit einem Material, das, ein flächiges, mit einer Vielzahl von Öffnungen versehenes, flexibles Substrat mit einer auf und in diesem Substrat befindlichen Beschichtung umfasst, wobei das Material des Substrates ausgewählt ist aus gewebten oder ungewebten, nicht elektrisch leitfähigen Fasern von Glas oder Keramik oder einer Kombination solcher Materialien und die Beschichtung eine poröse, elektrisch isolierende, keramische Beschichtung ist, und wobei der resultierende Separator eine sehr geringe Dicke von kleiner 100 $\mu$m aufweist und biegbar ist, ein Separator herstellbar ist, der in Verbindung mit dem Elektrolyten einen genügend geringen Widerstand aufweist und trotzdem eine ausreichend große Langzeitbeständigkeit aufweist.

Der in DE 101 42 622 beschriebene Separator weist zwar eine sehr hohe Leitfähigkeit auf, jedoch genügt der dort beschriebene Separator immer noch nicht den Anforderungen an einen technisch einsetzbaren Separator bezüglich der Dicke und des Gewichts sowie der Sicherheit. Bei der geringen Dicke des Separators von unter 100 $\mu$m stellen sich nämlich Probleme der Art ein, dass mit den relativ großen Poren mit einheitlicher Verteilung die eine gute Ionenleitfähigkeit gewährleisten, das Wachstum von Dendriten erleichtert wird. Daher treten in der Praxis häufig Kurzschlüsse auf, wenn die Dicke der Separatoren sehr gering ist.

In der noch nicht veröffentlichen Anmeldung DE 102 08 277 wurde das Gewicht und die Dicke des Separators dadurch reduziert, dass ein Polymervlies eingesetzt wurde, aber auch die dort beschriebenen Ausführungsformen eines Separators genügen noch nicht allen Anforderungen an einen Separator für eine Lithium-Hochenergiebatterie, insbesondere weil in dieser Anmeldung besonderer Wert gelegt wurde auf möglichst große Poren des Separators. Mit den dort beschriebenen, bis 5 $\mu$m großen Partikeln ist es aber nicht möglich, sehr dünne, zum Beispiel nur 10 bis 20 $\mu$m dicke, Separatoren herzustellen, da hier nur einige wenige Partikel übereinander zu liegen kämen. Dadurch würde der Separator zwangsläufig eine große Fehler- und Störstellendichte (z. B. Löcher, Risse, ...) aufweisen. Die großen Poren lassen jedoch das Wachstums von Dendriten zu, die sich leicht in den großen Poren bilden können. Somit treten auch bei diesen Separatoren in der Praxis häufig Kurzschlüsse auf. Zudem bestehen die großen Partikel in dieser Schrift aus Al$_2$O$_3$ und ZrO$_2$. Aufgrund der hohen Dichte dieser Keramiken weisen diese Separatoren außerdem ein großes Flächengewicht auf, wodurch die massenbezogene spezifische Energiedichte (in Wh/g) reduziert wird.

DE 101 15918 **und DE 101 15927 offenbaren Elektrolytmembranen sowie deren Herstellung.**

Zusammengefasst ergeben sich für Separatoren aus keramischen Verbundwerkstoffen folgende Probleme: Für eine hohe Leistungsfähigkeit eines Separators sind die Ionenleitungs-Eigenschaften von entscheidender Bedeutung. Die Ionenleitfähigkeit des Separators muss daher hoch sein. Dies ließe sich am besten mit groben, makroporösen Separatormaterialien realisieren, die große, lineare Poren aufweisen. Zugleich wird aber eine möglichst homogene Stromdichteverteilung an der Separatoroberfläche angestrebt. Dies kann durch kleine Partikel und eine homogene Verteilung kleiner Poren erreicht werden. Darüber hinaus muss aber auch das Wachstum von sogenannten Dendriten, d. h. baumartigen Strukturen von auf der Elektrode abgeschiedenem Material, verhindert werden, die zu Kurzschlüssen und somit zum Versagen einer elektrochemischen Zelle mit einem solchen Separator führen. Dazu sind mikroporöse Separatormaterialien mit nicht-linearen Poren am besten geeignet. Vor allem bei Elektroden mit einer großen Rauhigkeit ist es wichtig, dass die Poren des Separators deutlich kleiner sind als die Partikel in den Elektroden.

Der vorliegenden Erfindung lag deshalb die Aufgabe zu Grunde einen Separator für eine elektrochemische Zelle bereitzustellen, der sowohl eine hohe Ionenleitfähigkeit als auch eine homogene Stromdichteverteilung an der Separatoroberfläche aufweist und die Bildung von Dendriten auch bei kleinen Schichtdicken wirkungsvoll vermeidet.

Diese Aufgabe wird mit einem Separator nach Anspruch 1 gelöst,

Unter dem Begriff "zum in Kontaktbringen mit einer Elektrode" ist eine Kontaktierung mit einer Elektrode in dem Sinne zu verstehen, dass die zweite poröse Schicht einer Elektrode einer elektrochemischen Zelle zugeordnet werden kann. Nach dem Einbau in eine elektrochemische Zelle berührt diese zweite poröse Schicht eine der Elektroden der elektrochemischen Zelle, und die erste poröse Schicht berührt die andere Elektrode der elektrochemischen Zelle.

Für die meisten Anwendungen in elektrochemischen Zellen ist dieser asymmetrische Aufbau ausreichend. Für spezielle elektrochemische Zellen kann der Separator aber auch eine solche Struktur aufweisen, dass das poröse Keramikmaterial auf der Seite der ersten porösen Schicht, die der Seite der zweiten porösen Schicht gegenüberliegt, eine dritte poröse Schicht zur Kontaktierung einer gegenpoligen Elektrode umfasst, wobei die dritte Schicht eine mittlere Porengröße aufweist, die geringer ist als die mittlere Porengröße der ersten Schicht. Vorzugsweise liegt die mittlere Porengröße der zweiten und/oder gegebenenfalls der dritten Schicht des erfindungsgemäßen Separators im Bereich von 0,1 bis 50 %, vorzugsweise 0,2 bis 30 % der mittleren Porengröße der ersten Schicht.

Die mittlere Porengröße der ersten Schicht des erfindungsgemäßen Separators liegt vorzugsweise im Bereich von 80 bis 1000 nm, insbesondere 450 bis 800 nm. Die mittlere Porengröße der zweiten Schicht und/oder gegebenenfalls der dritten Schicht kann im Bereich von 5 bis 250 nm, insbesondere 25 bis 150 nm, vorzugsweise 50 bis 120 nm, ganz besonders bevorzugt 80 bis 120 nm liegen.

Gemäß der Erfindung liegen im Separator zwischen der ersten und zweiten Schicht und gegebenenfalls zwischen der ersten und der dritten Schicht eine oder mehrere Zwischenschichten vor, deren mittlere Porengrößen jeweils kleiner ist als die mittlere Porengröße der benachbarten Schicht, die in Richtung der ersten Schicht liegt, und größer als die mittlere Porengröße der Schicht, die in Richtung der dieser Seite zugeordneten Elektrode, d. h. in Richtung der zweiten und gegebenenfalls der dritten Schicht, ist.

Bei einer bevorzugten Ausführungsform der Erfindung weisen, ausgehend von der ersten Schicht in Richtung der einer Elektrode zugeordneten zweiten und/oder gegebenenfalls dritten Schicht, benachbarte Schichten jeweils eine mittlere Porengröße auf, die von 20 bis 50 % der mittleren Porengröße der Ausgangsschicht beträgt.

Bei dem Separator der Erfindung kann das poröse Keramikmaterial ein Oxid von Zirkonium, Silizium und/oder vorzugsweise Aluminium umfassen.

Vorteilhafterweise ist bei dem erfindungsgemäßen Separator das Keramikmaterial herstellbar durch Verfestigung eines Schlickers, der Teilchen mit einer großen mittleren Teilchengröße enthält, die die Porenstruktur des Keramikmaterials bestimmen, sowie Teilchen mit einer kleineren mittleren Primärteilchengröße, die bei der Verfestigung des Schlickers die großen Teilchen verkleben.

Außerdem können bei dem so herstellbaren Separator die Oberfläche der Teilchen, die die Schichten bilden, zusätzlich $SiO_2$, $Al_2O_3$, $ZrO_2$ oder SiC umfassen.

Außerdem können die Schichten des Separators vorteilhafterweise $Li_2CO_3$, $Li_3N$, $LiAlO_2$, oder $Li_xAl_yTi_z(PO_4)_3$ mit $1 \leq x \leq 2$, $0 \leq y \leq 1$ und $1 \leq z \leq 2$, umfassen. Dadurch kann die Ionenleitfähigkeit durch den Separator vorteilhaft erhöht werden.

Der Separator der Erfindung weist vorzugsweise eine Porosität von 15 bis 80 %, vorzugsweise von 20 % bis 45 %, auf.

Der durchbrochene Träger umfasst bei einer bevorzugten Ausführungsform der vorliegenden Erfindung Fasern, bevorzugt ausgewählt aus Fasern von Polyamid, Polyacrylnitril, Polyester, wie z. B. Polyethylenterephthalat (PET) und/oder Polyolefin, wie z. B. Polyethylen (PE) oder Polypropylen (PP), Glasfasern oder Keramikfasern. Wenn der durchbrochene Träger Polymerfasern umfasst, können andere als die oben genannten Polymerfasern eingesetzt werden, sofern sie sowohl die für die Herstellung der Separatoren erforderliche Temperaturstabilität aufweisen als auch unter den Betriebsbedingungen in einer elektrochemischen Zelle, insbesondere einer Lithiumbatterie, stabil sind. Bei einer bevorzugten Ausführungsform weist der erfindungsgemäße Separator Polymerfasern auf, die eine Erweichungstemperatur von größer 100 °C und eine Schmelztemperatur von größer 110 °C aufweisen.

Der Träger kann Fasern und/oder Filamente mit einem Durchmesser von 1 bis 150 $\mu$m, vorzugsweise 1 bis 20 $\mu$m, und/oder Fäden mit einem Durchmesser von 3 bis 150 $\mu$m, vorzugsweise 10 bis 70 $\mu$m, umfassen.

Bei einer weiteren Ausgestaltung der Erfindung ist der Träger ein Vlies mit einer Porenweite von 5 bis 500 $\mu$m, vorzugsweise 10 bis 200 $\mu$m.

Der Separator der Erfindung kann eine Dicke im Bereich von 10 bis 1000 $\mu$m, vorzugsweise 10 bis 100 $\mu$m, ganz besonders bevorzugt 10 bis 50 $\mu$m aufweisen.

Der Separator der Erfindung kann aufgrund seiner Verbundstruktur einen Biegeradius bis herab zu 100 mm, vorzugsweise bis herab zu 20 mm, ganz besonders bevorzugt bis herab zu 1 mm tolerieren.

Der Separator der vorliegenden Erfindung ist aufgrund seiner erfindungsgemäßen Ausgestaltung hervorragend geeignet für elektrochemische Zellen mit hoher Kapazität und hoher Energiedichte. Insbesondere ist der erfindungsgemäße Separator für elektrochemische Zellen geeignet, die auf der Übertragung von Alkali- und/oder Erdalkali-Metall-Ionen beruhen, wie z. B. Lithium-Metall- und Lithium-Ionen-Batterien. Daher ist es vorteilhaft, wenn die Separatoren auch die für diese Anwendung spezifischen Schutzmaßnahmen, wie die Unterbrechungseigenschaft und Kurzschlusseigenschaft mit hoher Kurzschlusstemperatur zeigen. Unter Unterbrechungseigenschaft oder Abschaltung ("shutdown") ist eine Maßnahme zu verstehen, bei der dem Separator für bestimmte Betriebstemperaturen auszusuchende und leicht schmelzende Stoffe, wie zum Beispiel thermoplastische Kunststoffe, einverleibt sein können. Bei einem Ansteigen der Betriebstemperatur durch Störungen wie Überladung, äußere oder innere Kurzschlüsse, können solche leicht schmelzenden Stoffe schmelzen und die Poren des Separators verstopfen. Somit wird der Ionenfluss durch den Separator teilweise oder vollständig blockiert und ein weiteres Ansteigen der Temperatur wird verhindert. Kurzschlusseigenschaft oder Zusammenbruch ("melt-down") bedeutet, dass der Separator bei einer Kurzschlusstemperatur vollständig schmilzt. Dann kann es zwischen großen Flächen der Elektroden einer elektrochemischen Zelle zu einem Kontakt und einem Kurzschluss kommen. Für einen sicheren Betrieb einer elektrochemischen Zelle mit hoher Kapazität und Energiedichte ist eine möglichst hohe Kurzschlusstemperatur wünschenswert. Der erfindungsgemäße Separator weist dabei einen bedeutenden Vorteil auf. Denn das Keramikmaterial das bei dem Separator der vorliegenden Erfindung an dem durchbrochenen Träger haftet, besitzt einen Schmelzpunkt, der weit oberhalb des sicherheitsrelevantes Temperaturbereichs für elektrochemische Zellen liegt. Der Separator der vorliegenden Erfindung weist daher eine überragende Sicherheit auf. Er ist nämlich bei einer bevorzugten sicheren Ausführungsform unter Einsatzbedingungen von mindestens 50 °C stabil. Noch bevorzugterweise ist er bei mindestens 100 °C, 150 °C, und ganz besonders bevorzugt bei mindestens 180 °C stabil.

Polymerseparatoren bringen beispielsweise die für Lithium-Batterien zur Zeit geforderte Sicherheit, indem sie ab einer bestimmten Temperatur (der Shut-Down-Temperatur, die bei ca. 120 °C liegt) jeglichen Stromtransport durch den Elektrolyten unterbinden. Dies geschieht dadurch, dass bei dieser Temperatur das Porengefüge des Separators zusammenbricht und alle Poren verschlossen werden. Dadurch, dass keine Ionen mehr transportiert werden können, kommt die gefährliche Reaktion, die zur Explosion führen kann, zum erliegen. Wird die Zelle aufgrund äußerer Umstände aber weiter erwärmt, so wird bei ca. 150 bis 180 °C die Break-Down-Temperatur überschritten. Ab dieser Temperatur kommt es zum Schmelzen des Separators, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion, die mit einer Explosion der Zelle endet, bzw. der entstehende Druck wird durch ein Überdruckventil (eine Berstscheibe) häufig unter Feuererscheinungen abgebaut.

Bei einer besonders bevorzugten Ausführungsform der Erfindung umfasst der flexible, durchbrochene Träger des Separators Polymerfasern. Bei diesem hybriden Separator, der anorganische Komponenten und polymeres Trägermaterial aufweist, kommt es zum Shut-Down (Abschaltung) wenn durch die hohe Temperatur das Polymergefüge des Trägermaterials schmilzt und in die Poren des anorganischen Materials eindringt und diese dadurch verschließt. Zum sogenannten Melt-Down (Zusammenbruch) kommt es bei dem erfindungsgemäßen Separator dagegen nicht. Der erfindungsgemäße Separator erfüllt also die Anforderungen nach einer von verschiedenen Batterieherstellern geforderten Sicherheitsabschaltung durch den Shut-Down in den Batteriezellen. Die anorganischen Partikel sorgen dafür, dass es niemals zu einem Melt-Down kommen kann. Somit ist sichergestellt, dass es keine Betriebszustände gibt, in denen ein großflächiger Kurzschluss entstehen kann.

Es kann vorteilhaft sein, wenn der Separator einen zusätzlichen nicht inhärenten Shut-Down-Mechanismus aufweist. Dieser kann z. B. dadurch realisiert werden, dass auf oder in dem Separator eine sehr dünne Wachs- oder Polymerpartikelschicht sogenannter Abschaltpartikel, die bei einer gewünschten Abschalttemperatur schmelzen, vorhanden ist. Besonders bevorzugte Materialien, aus denen die Abschaltpartikel bestehen können, sind beispielweise natürliche oder künstliche Wachse, niedrigschmelzende Polymere, wie z. B. Polyolefine, wobei das Material der Abschaltpartikel so ausgewählt wird, das die Partikel bei der gewünschten Abschalttemperatur aufschmelzen und die Poren des Separators verschließen, so dass ein weiterer Ionenfluss verhindert wird.

Vorzugsweise weisen die Abschaltpartikel eine mittlere Partikelgröße ($D_w$) auf, die größer oder gleich der mittleren Porengröße ($d_s$) der Poren der porösen anorganischen Schicht des Separator ist. Dies ist insbesondere deshalb vorteilhaft, weil so ein Eindringen und Verschließen der Poren der Separatorschicht, welches eine Reduktion des Porenvolumens und damit der Leitfähigkeit des Separators und auch der Leistungsfähigkeit der Batterie zur Folge hätte, verhindert wird. Die Dicke der Abschaltpartikelschicht ist nur in sofern kritisch, wenn eine zu dicke Schicht den Widerstand in dem Batteriesystem unnötig erhöhen würde. Um eine sichere Abschaltung zu erzielen, sollte die Abschaltpartikelschicht eine Dicke ($z_w$) aufweisen, die von ungefähr gleich der mittleren Partikelgröße der Abschaltpartikel ($D_w$) bis zu 10 $D_w$, vorzugsweise von 2 $D_w$ bis $D_w$ beträgt. Ein so ausgerüsteter Separator weist ein primäres Sicherheitsmerkmal auf. Im Gegensatz zu den rein organischen Separatormaterialien kann dieser Separator aber nicht vollständig schmelzen und es kann somit nicht zum Melt-Down kommen. Diese Sicherheitsmerkmale sind aufgrund der sehr großen Energiemengen für Hochenergiebatterien sehr wichtig und werden deshalb häufig gefordert.

Auch bei einem inneren Kurzschluss, der z. B. durch einen Unfall verursacht wurde, ist der erfindungsgemäße Separator sehr sicher. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei der Ausführungsform mit dem erfindungsgemäßen hybriden Separator schmilzt allenfalls das polymere Substratmaterial, nicht aber das anorganische Separatormaterial. Somit läuft die Reaktion im Inneren der Batteriezelle nach einem solchen Unfall sehr viel moderater ab. Diese Batterie ist somit deutlich sicherer als eine mit Polymerseparator. Dies kommt vor allem im mobilen Bereich zum Tragen.

Der oben beschriebene erfindungsgemäße Separator für eine elektrochemische Zelle kann nach dem Verfahren gemäß Anspruch 20 hergestellt werden.

Bei diesem Verfahren können die Keramikteilchen ein Material umfassen, das ausgewählt ist aus der Gruppe, bestehend aus Aluminiumoxid, Siliciumoxid und Zirkoniumoxid oder aus deren Mischoxiden oder Mischungen davon.

Die Keramikteilchen mit einer kleinen mittleren Teilchengröße für die beschriebenen Verfahren sind vorzugsweise herstellbar durch Hydrolyse und Peptisierung einer oder mehrerer Verbindungen, die ausgewählt sind aus einem Nitrat, Oxynitrat, Chlorid, Oxychlorid, Carbonat, Alkoholat, Acetat oder Acetylacetonat von Zirkonium, Silizium oder Aluminium.

Die Oberfläche der Teilchen, die die Schichten bilden, können vorzugsweise zusätzlich feine Teilchen enthalten, die $SiO_2$, $Al_2O_3$, $ZrO_2$ oder SiC umfassen.

Ferner kann die Oberfläche der Teilchen, die die Schichten bilden, ganz besonders bevorzugt zusätzlich feine Teilchen aufweisen, die beispielsweise $Li_2CO_3$, $Li_3N$, $LiAlO_2$, oder $Li_xAl_yTi_z(PO_4)_3$ mit $1 \leq x \leq 2$, $0 \leq y \leq 1$ und $1 \leq z \leq 2$, umfassen. Ganz besonders bevorzugt liegt die mittlere Teilchengröße der feinen Teilchen im Bereich von 0,5 bis 30 %, vorzugsweise 1 bis 15 %, der mittleren Porengröße der jeweiligen ersten und/oder zweiten und gegebenenfalls der dritten porösen Schicht der Keramikmaterialien. Durch diese Belegung der Porenoberfläche der porösen Schichten der Keramikmaterialien kann die Standzeit der Separatoren vorteilhaft erhöht werden.

Bei einer weiteren vorteilhaften Ausführungsform des Verfahrens weist die Dispersion in Schritt (a) und/oder (c) zumindest ein Oxid der Elemente Al, Zr und/oder Si und ein Sol von zumindest einem der Elemente Al, Si und/oder Zr auf.

Ferner kann bei dem erfindungsgemäßen Verfahren das Gewebe und/oder Vlies Fasern enthalten, die ausgewählt sind aus Polyamid, Polyacrylnitril, Polyester oder Polyolefin.

Die Dispersion kann durch Aufdrucken, Aufpressen, Einpressen, Aufrollen, Aufrakeln, Aufstreichen, Tauchen, Spritzen oder Aufgießen aufgebracht werden.

Zur Herstellung der Keramikteilchen gemäß (a2) und/oder (c2) kann vorzugsweise zumindest eine Alkoholatverbindung der Elemente Zr, Al und/oder Si oder zumindest ein Nitrat, Carbonat oder Halogenid der Elemente Zr, Al und/oder Si hydrolisiert werden.

Vorteilhafterweise können die Keramikteilchen gemäß Schritt (a2) und/oder (c2) eine mittlere Primärpartikelgröße von 4 bis 50 nm aufweisen.

Das Verfestigen erfolgt vorzugsweise innerhalb von 0,5 bis 10 Minuten bei einer Temperatur von 200 bis 280 °C.

Das Verfahren zum Aufbringen einer Dispersion als dünne Schicht auf und in einen flexiblen, durchbrochenen Träger, wie ein Gewebe oder Vlies, zur Herstellung eines Verbundwerkstoffs, umfassend diesen flexiblen, durchbrochenen Träger und ein poröses Keramikmaterial mit dem die Durchbrechungen des Trägers gefüllt werden, und das Aufbringen einer weiteren Dispersion auf mindestens eine Seite einer Schicht aus porösem Keramikmaterial ist prinzipiell aus WO 99/15262 bekannt. Jedoch lassen sich nicht alle Parameter bzw. Einsatzstoffe, insbesondere nicht elektrisch leitfähige Einsatzstoffe, für die Herstellung des erfindungsgemäßen Separators einsetzen. Insbesondere die zur Herstellung der Dispersion verwendeten Keramikteilchen, deren mittlere Teilchengrößen wie oben beschrieben definiert sein müssen sowie die als flexiblen, durchbrochenen Träger verwendeten Materialien unterscheiden sich von den dort beschriebenen Einsatzstoffen.

Die Dispersion kann z. B. durch Aufdrucken, Aufpressen, Einpressen Aufrollen, Aufrakeln, Aufstreichen, Tauchen, Spritzen oder Aufgießen auf und in den flexiblen, durchbrochenen Träger oder auf eine Seite einer Schicht aus porösem Keramikmaterial gebracht werden.

Die zum Auf- und Einbringen in den flexiblen, durchbrochenen Träger oder zum Aufbringen auf eine Seite einer Schicht aus porösem Keramikmaterial verwendete Dispersion kann ein Sol der Elemente Al, Zr und/oder Si aufweisen, und wird vorzugsweise durch Dispergieren der Keramikpartikel und gegebenenfalls von feinen Teilchen in einem dieser Sole hergestellt. Die Sole können durch Hydrolisieren zumindest einer Verbindung, mit Wasser oder einer Säure oder einer Kombination dieser Verbindungen erhalten werden. Es kann vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Nitrat, ein Chlorid, ein Carbonat, ein Alkoholat der Elemente Al, Zr und/oder Si hydrolisiert. Die Hydrolyse erfolgt vorzugsweise in Gegenwart von Wasser, Wasserdampf, Eis oder einer Säure oder eine Kombination dieser Verbindungen.

In einer Ausführungsvariante des erfindungsgemäßen Verfahrens werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60%igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden. Die so hergestellten partikulären Sole können anschließend zur Herstellung von Dispersionen eingesetzt werden, wobei die Herstellung von Dispersionen zum Aufbringen auf mit polymerem Sol vorbehandelten Faservliesen bevorzugt ist.

In einer weiteren Ausführungsvariante des erfindungsgemäßen Verfahrens werden durch Hydrolyse der zu hydrolisierenden Verbindungen polymere Sole hergestellt. Bei dieser bevorzugten Ausführungsvariante des erfindungsgemäßen Verfahrens weist das Sol einen Anteil an Wasser und/oder Säure von kleiner 50 Gew.-% auf. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässeriger Säure auf. Um auf den bevorzugten Anteil von Wasser und/oder wässeriger Säure zu kommen, wird die Hydrolyse vorzugsweise so durchgeführt, dass die zu hydrolisierende Verbindung mit dem 0,5 bis 10fachen Molverhältnis und bevorzugt mit dem halben Molverhältriis Wasser, Wasserdampf oder Eis, bezogen auf die hydrolisierbare Gruppe, der hydrolisierbaren Verbindung, hydrolisiert wird. Eine bis zu 10fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5fache Menge an Wasser eingesetzt wird. Eine Hydrolyse mit weniger als der bevorzugten Menge an Wasser, Wasserdampf, oder Eis führt ebenfalls zu guten Ergebnissen. Ein Unterschreiten der bevorzugten Menge von einem halben Molverhältnis um mehr als 50 % ist möglich aber nicht sehr sinnvoll, da beim Unterschreiten dieses Wertes die Hydrolyse nicht mehr vollständig ist, und Beschichtungen auf Basis solcher Sole nicht sehr stabil sind.

Zur Herstellung von Solen mit einem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Separatoren eingesetzt werden.

Sowohl partikuläre Sole (großer Wasseranteil, geringer Lösemittelanteil) als auch polymere Sole (geringer Wasseranteil, großer Lösemittelanteil) können als Sol in dem erfindungsgemäßen Verfahren zur Herstellung einer Dispersion eingesetzt werden. Neben den Solen, die wie gerade beschrieben erhältlich sind, können prinzipiell auch handelsübliche Sole, wie z. B. Zirkonnitratsol oder Silicasol eingesetzt werden. Das Verfahren der Herstellung von Separatoren durch Aufbringen und Verfestigen einer Suspension auf einen Träger an und für sich ist aus DE 101 42 622 und in ähnlicher Form aus WO 99/15262 bekannt, jedoch lassen sich nicht alle Parameter bzw. Einsatzstoffe, auf die Herstellung der erfindungsgemäßen Membran übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymervliese in der Tiefe ermöglichen, da die sehr wasserhaltigen Solsysteme die meisten Polymervliese nicht oder nur schlecht benetzen. Es wurde festgestellt, dass selbst kleinste unbenetzte Stellen im Vliesmaterial dazu führen können, dass Membranen bzw. Separatoren erhalten werden, die Fehler aufweisen und damit unbrauchbar sind.

Es wurde nun überraschenderweise gefunden, dass ein Solsystem bzw. eine Dispersion, welches bzw. welche im Benetzungsverhalten den Polymeren angepasst wurde, Vliesmaterialien vollständig durchtränkt und somit fehlerfreie Beschichtungen erhältlich sind. Bevorzugt erfolgt bei dem erfindungsgemäßen Verfahren deshalb eine Anpassung des Benetzungsverhaltens des Sols bzw. der Dispersion. Diese Anpassung erfolgt vorzugsweise durch die Herstellung von Solen bzw. Dispersionen, wobei diese Sole einen oder mehrere Alkohole, wie z. B. Methanol, Ethanol oder Propanol oder Mischungen davon, und/oder aliphatische Kohlenwasserstoffe aufweisen, umfassen. Es sind aber auch andere Lösemittelgemische denkbar, die dem Sol bzw. der Suspension zugegeben werden können, um diese im Vernetzungsverhalten an das verwendete Vlies anzupassen.

Vorzugsweise beträgt der Massenanteil der suspendierten Komponente (Oxid-Partikel oder Metalloxidpartikel) an der Dispersion das 1 bis 100fache, besonders bevorzugt das 1 bis 50fache und ganz besonders bevorzugt das 1 bis 10fache des eingesetzten Sols. Besonders bevorzugt werden zur Herstellung der Dispersion als Oxid-Partikel Aluminiumoxidpartikel eingesetzt, die bevorzugt eine mittlere Partikelgröße von 0,1 bis 10 $\mu$m, insbesondere 0,5 bis 5 $\mu$m aufweisen. Aluminiumoxid-Partikel im Bereich der bevorzugten Partikelgrößen werden beispielsweise von der Firma Martinswerke unter den Bezeichnungen MDS 6; DN 206, MZS 3 und MZS 1 und von der Fa. Alcoa mit der Bezeichnung CL3000 SG, CT800 SG und HVA SG angeboten.

Es hat sich herausgestellt, dass der Einsatz von handelsüblichen Oxidpartikeln unter Umständen zu unbefriedigenden Ergebnissen führt, da häufig eine sehr große Korngrößenverteilung vorliegt. Es werden deshalb bevorzugt Oxidpartikel eingesetzt, die durch ein herkömmliches Verfahren, wie z. B. Windsichten, Zentrifugieren und Hydroklassieren klassiert wurden. Bevorzugt werden als Oxidpartikel solche Fraktionen eingesetzt, bei denen der Grobkornanteil, welcher bis zu 10 % der Gesamtmenge ausmacht, durch Nasssiebung abgetrennt wurde. Dieser störende Grobkornanteil, der auch durch die bei der Herstellung der Schlicker typische Verfahren wie etwa Mahlen (Kugelmühle, Attritormühle, Mörsermühle), Dispergieren (Ultra-Turrax, Ultraschall), Zerreiben oder Zerhacken nicht oder nur sehr schwer zerkleinert werden kann, kann z. B. bestehen aus Aggregaten, harten Agglomeraten, Mahlkugelabrieb. Durch die vorgenannten Maßnahmen wird erreicht, dass die anorganische poröse Schicht eine sehr gleichmäßige Porengrößenverteilung aufweist. Dies wird insbesondere dadurch erreicht, dass Oxid-Partikel eingesetzt werden, die eine maximale Partikelgröße von vorzugsweise 1/3 bis 1/5 und besonders bevorzugt kleiner oder gleich 1/10 der Dicke des eingesetzten Vlieses aufweisen.

Die folgende Tabelle 1 gibt eine Übersicht, wie sich die Wahl der verschiedenen Aluminiumoxide auf die Porosität und die resultierende Porengröße der jeweiligen porösen anorganischen Beschichtung auswirkt. Zur Ermittlung dieser Daten wurden die entsprechenden Schlicker (Suspensionen oder Dispersionen) hergestellt und als reine Formkörper bei 200 °C getrocknet und verfestigt.

Tabelle 1: Typische Daten von Keramiken in Abhängigkeit vom eingesetzten Pulvertyp

| $Al_2O_3$-Typ | Porosität / % | Mittl. Porengröße / nm |
|---|---|---|
| AlCoA CL3000SG | 51 | 755 |
| AlCoA CT800SG | 53,1 | 820 |
| AlCoA HVA SG | 53,3 | 865 |
| AlCoA CL4400FG | 44,8 | 1015 |
| Martinsw. DN 206 | 42,9 | 1025 |
| Martinsw. MDS 6 | 40,8 | 605 |
| Martinsw. MZS 1 + Martinsw. MZS 3 = 1:1 | 47 % | 445 |
| Martinsw. MZS 3 | 48 % | 690 |

Zur Verbesserung der Haftung der anorganischen Komponenten an Polymerfasern als Substrat kann es vorteilhaft sein, den eingesetzten Suspensionen Haftvermittler, wie z. B. organofunktionelle Silane beizufügen. Als Haftvermittler sind insbesondere Verbindungen, ausgewählt aus den Octylsilanen, den Vinylsilanen, den aminfunktionalisierten Silanen und/oder den Glycidyl-funktionalisierten Silanen, wie z. B. die Dynasilane der Fa. Degussa einsetzbar. Besonders bevorzugte Haftvermittler für Polymerfasern, wie Polyethylen (PE) und Polypropylen (PP) sind Vinyl-, Methyl- und Octylsilane, wobei eine ausschließliche Verwendung von Methylsilanen nicht optimal ist, für Polyamide und Polyamine sind es Aminfunktionelle Silane, für Polyacrylate und Polyester sind es Glycidyl-funktionalisierte Silane und für Polyacrylnitril kann man auch Glycidylfunktionalisierte Silane einsetzen. Auch andere Haftvermittler sind einsetzbar, die aber auf die jeweiligen Polymere abgestimmt sein müssen. Die Haftvermittler werden vorteilhafterweise so ausgewählt, dass die Verfestigungstemperatur unterhalb des Schmelz- oder Erweichungspunktes des als Substrat eingesetzten Polymeren und unterhalb dessen Zersetzungstemperatur liegt. Bevorzugt weisen erfindungsgemäße Dispersionen sehr viel weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in $m^2g^{-1}$) und anschließendes Dividieren durch den spezifischen Platzbedarf der Haftvermittler (in $m^2 g^{-1}$) erhalten werden, wobei der spezifische Platzbedarf häufig in der Größenordnung von 300 bis 400 $m^2 g^{-1}$ liegt.

Die nachfolgende Tabelle 2 enthält einen beispielhaften Überblick über einsetzbare Haftvermittler auf Basis von organofunktionellen Si-Verbindungen für typische als Vliesmaterial verwendete Polymere.

Tabelle 2

| Polymer | Organofunktionstyp | Haftvermittler |
|---|---|---|
| PAN | Glycidyl<br>Methacryl | GLYMO<br>MEMO |
| PA | Amino | AMEO, DAMO |

(fortgesetzt)

| Polymer | Organofunktionstyp | Haftvermittler |
|---|---|---|
| PET | Methacryl<br>Vinyl | MEMO<br>VTMO, VTEO, VTMOEO |
| PE, PP | Amino<br>Vinyl<br>Methacryl | AMEO, AMMO<br>VTMO, VTEO, Silfin<br>MEMO |

Mit:

AMEO = 3-Aminopropyltriethoxysilan DAMO = 2-Aminoethyl-3-aminopropyltrimethoxysilan GLYMO = 3-Glycidyloxytrimethoxysilan MEMO = 3-methacryloxypropyltrimethoxysilan Silfin = Vinylsilan + Initiator + Katalysator VTEO = Vinyltriethoxysilan VTMO = Vinyltrimethoxysilan VTMOEO = Vinyltris(2-methoxyethoxy)silan

In einer besonderen Ausführungsform des erfindungsgemäßen Verfahrens werden die oben genannten Haftvermittler in einem vorgeschalteten Schritt auf den flexiblen, durchbrochenen Träger, wie z. B. ein Polymervlies aufgebracht. Hierzu werden die Haftvermittler in einem geeigneten Lösemittel, wie z. B. Ethanol gelöst. Diese Lösung kann auch noch eine geringe Menge an Wasser, vorzugsweise die 0,5 bis 10fache Menge bezogen auf die molare Menge der hydrolysierbaren Gruppe, und kleine Mengen einer Säure, wie z. B. HCl oder $HNO_3$, als Katalysator für die Hydrolyse und Kondensation der Si-OR-Gruppen enthalten. Durch die bekannten Techniken, wie z. B. Aufsprühen, Aufdrucken, Aufpressen, Einpressen Aufrollen, Aufrakeln, Aufstreichen, Tauchen, Spritzen oder Aufgießen wird diese Lösung auf den Träger aufgebracht und der Haftvermittler durch eine Temperaturbehandlung bei 50 bis maximal 350 °C auf dem Träger fixiert. Erst nach dem Aufbringen des Haftvermittlers erfolgt bei dieser Ausführungsvariante des erfindungsgemäßen Verfahrens das Aufbringen und Verfestigen der Dispersion.

Durch das Aufbringen eines Haftvermittlers vor dem eigentlichen Aufbringen der Dispersion kann das Haftverhalten der flexiblen Träger insbesondere gegenüber wässrigen, partikulären Solen verbessert werden, weshalb insbesondere so vorbehandelte Träger mit Suspensionen auf Basis von handelsüblichen Solen, wie z. B. Zirkonnitratsol oder Silicasol erfindungsgemäß beschichtet werden können. Diese Vorgehensweise des Aufbringens eines Haftvermittlers bedeutet aber auch, dass das Herstellverfahren der erfindungsgemäßen Separatoren um einen Zwischen- bzw. Vorbehandlungsschritt erweitert werden muss. Dies ist machbar allerdings auch aufwändiger als die Verwendung von angepassten Solen denen Haftvermittler beigegeben wurden, hat aber auch den Vorteil, dass auch beim Einsatz von Dispersionen auf Basis von handelsüblichen Solen bessere Ergebnisse erzielt werden.

Die erfindungsgemäßen Beschichtungen werden durch Verfestigen der Dispersion in und auf dem Träger und zumindest auf eine Seite einer Schicht aus porösem Keramikmaterial gebracht. Erfindungsgemäß kann die auf und im Träger vorhandene Dispersion oder auf einer Seite einer Schicht aus porösem Keramikmaterial durch Erwärmen auf 50 bis 350 °C verfestigt werden. Da bei der Verwendung polymerer Substratmaterialien die maximale Temperatur durch das Polymervlies vorgegeben wird, ist diese entsprechend anzupassen. So wird je nach Ausführungsvariante des erfindungsgemäßen Verfahrens die auf und in einem Vlies vorhandene Dispersion durch Erwärmen auf 100 bis 350 °C und ganz besonders bevorzugt durch Erwärmen auf 110 bis 280 °C verfestigt. Es kann vorteilhaft sein, wenn das Erwärmen für 1 Sekunde bis 60 Minuten bei einer Temperatur von 100 bis 350 °C erfolgt. Besonders bevorzugt erfolgt das Erwärmen der Dispersion zum Verfestigen auf eine Temperatur von 110 bis 300 °C, ganz besonders bevorzugt bei einer Temperatur von 110 bis 280 °C und vorzugsweise für 0,5 bis 10 min.

Das erfindungsgemäße Erwärmen des Verbundes kann mittels erwärmter Luft, Heißluft, Infrarotstrahlung oder durch andere Erwärmungsmethoden nach dem Stand der Technik erfolgen.

Das erfindungsgemäße Verfahren kann z. B. so durchgeführt werden, dass der flexible Träger, z. B. ein Polymervlies, und/oder der Verbundwerkstoff eines bereits beschichteten Trägers von einer Rolle abgerollt wird, mit einer Geschwindigkeit von 1 m/h bis 2 m/s, vorzugsweise mit einer Geschwindigkeit von 0,5 m/min, bis 20 m/min und ganz besonders bevorzugt mit einer Geschwindigkeit von 1 m/min bis 5 m/min durch zumindest eine Apparatur, welche die Dispersion auf und in den Träger bringt, wie z. B. eine Walze, und zumindest eine weitere Apparatur, welche das Verfestigen der Dispersion auf und in dem Träger durch Erwärmen ermöglicht, wie z. B. ein elektrisch beheizter Ofen durchläuft und das so hergestellte Produkt auf einer zweiten Rolle aufgerollt wird. Auf diese Weise ist es möglich, einen erfindungsgemäßen Separator im Durchlaufverfahren herzustellen. Auch die Vorbehandlungsschritte können im Durchlaufverfahren unter Beibehaltung der genannten Parameter durchgeführt werden.

Es hat sich als besonders vorteilhaft erwiesen, wenn das Verfahren so durchgeführt wird, dass der Träger (unbeschichtet oder bereits beschichtet), insbesondere ein Polymervlies während des Beschichtungsprozesses bzw. der Beschichtungsprozesse eine maximale Spannung in Längsrichtung von 10 N/cm, vorzugsweise von 3 N/cm aufweist. Unter Beschichtungsprozessen werden dabei alle Verfahrenschritte verstanden, bei denen ein Material auf und in einen unbeschichteten oder beschichteten Träger gebracht wird und dort durch Wärmebehandlung verfestigt wird, also auch das Aufbringen des Haftvermittlers. Vorzugsweise wird der Träger während der Beschichtungsprozesse mit einer maximalen Kraft von 0,01 N/cm gespannt. Besonders bevorzugt kann es sein, wenn das Substrat während des Beschichtungsprozesses bzw. der Beschichtungsprozesse in Längsrichtung ungespannt geführt wird.

Durch die Kontrolle der Zugspannung während der Beschichtung kann vermieden werden, dass eine Deformation (auch elastische) des Trägermaterials stattfindet. Durch eine evtl. Deformation (Dehnung) bei zu hoher Zugspannung kann die keramische Beschichtung dem Träger-Werkstoff nicht folgen, was dazu führt, das die Beschichtung sich auf der gesamten Fläche vom Vliesmaterial löst. Das daraus resultierende Produkt kann dann nicht bestimmungsgemäß verwendet werden.

Soll der erfindungsgemäße Separator mit einem zusätzlichen automatischen Abschaltmechanismus ausgerüstet werden, so kann dies z. B. dadurch geschehen, dass nach dem Verfestigen der auf das Substrat aufgebrachten Dispersion eine Schicht aus Partikeln, die bei einer gewünschten Temperatur schmelzen und die Poren des Separators verschließen, so genannte Abschaltpartikeln, zur Erzeugung eines Abschaltmechanismus auf den Separator aufgebracht und fixiert wird. Die Schicht aus Abschaltpartikeln kann z. B. durch Aufbringen einer Suspension von Wachspartikeln mit einer mittleren Partikelgröße größer der mittleren Porengröße des Separators in einem Sol, Wasser, Lösemittel oder Lösemittelgemisch erzeugt werden.

Die Suspension zur Aufbringung der Partikel enthält vorzugsweise von 1 bis 50 Gew.-%, bevorzugt von 5 bis 40 Gew.-% und ganz besonders bevorzugt von 10 bis 30 Gew.-% an Abschaltpartikeln, insbesondere Wachspartikeln in der Suspension.

Da die anorganische Beschichtung des Separators häufig einen sehr hydrophilen Charakter hat, hat es sich als vorteilhaft erwiesen, wenn die Beschichtung des Separators unter Verwendung eines Silans in einem polymeren Sol als Haftvermittler hergestellt wurden und somit hydrophobiert wurden. Um eine gute Haftung und gleichmäßige Verteilung der Abschaltpartikel in der Abschaltschicht auch auf hydrophilen porösen anorganischen Separatorschichten zu erreichen, sind mehrere Varianten möglich.

In einer Ausführungsvariante des erfindungsgemäßen Verfahrens hat es sich als vorteilhaft erwiesen, die poröse anorganische Schicht des Separators vor dem Aufbringen der Abschaltpartikel zu hydrophobieren. Die Herstellung hydrophober Membrane, die nach dem selben Prinzip funktioniert, wird beispielsweise in WO 99/62624 beschrieben. Vorzugsweise wird die poröse anorganische Beschichtung durch Behandlung mit Alkyl-, Aryl- oder Fluoralkylsilanen, wie sie z. B. unter dem Namen Markennamen Dynasilan von der Degussa vertrieben werden, hydrophobiert. Es können dabei z. B. die bekannten Methoden der Hydrophobierung, die unter anderem für Textilien angewendet werden (D. Knittel; E. Schollmeyer; Melliand Textilber. (1998) 79(5), 362-363), unter geringfügiger Änderung der Rezepturen, auch für die porösen Beschichtungen des Separators angewendet werden. Zu diesem Zweck wird die Beschichtung bzw. der Separator mit einer Lösung behandelt, die zumindest einen hydrophoben Stoff aufweist. Es kann vorteilhaft sein, wenn die Lösung als Lösemittel Wasser, welches vorzugsweise mit einer Säure, vorzugsweise Essigsäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. an Alkohol am Lösemittel kann jeweils von 0 bis 100 Vol.-% betragen. Vorzugsweise beträgt der Anteil an Wasser am Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10 Gew.-% eines hydrophoben Stoffes gegeben werden. Als hydrophobe Stoffe können z. B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyltriethoxysilan oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die anorganische Beschichtung des Separators aufgebracht und getrocknet. Das Trocknen kann durch eine Behandlung bei Temperaturen von 25 bis 100 °C beschleunigt werden.

In einer weiteren Ausführungsvariante des erfindungsgemäßen Verfahren kann die poröse anorganische Beschichtung vor dem Aufbringen der Abschaltpartikel auch mit anderen Haftvermittlern behandelt werden. Die Behandlung mit einem der unten genannten Haftvermittler kann dann ebenfalls wie oben beschrieben erfolgen, d. h. dass die poröse anorganische Schicht mit einem polymeren Sol, welches ein Silan als Haftvermittler aufweist, behandelt wird.

Die Schicht aus Abschaltpartikeln wird vorzugsweise durch Aufbringen einer Suspension von Abschaltpartikeln in einem Suspensionsmittel, ausgewählt aus einem Sol, Wasser oder Lösemittel, wie z. B. Alkohol, Ether oder Ketone, oder einem Lösemittelgemisch auf die anorganische Beschichtung des Separators und anschließendes Trocknen erzeugt. Die Partikelgröße der in der Suspension vorliegenden Abschaltpartikel ist prinzipiell beliebig. Es ist jedoch vorteilhaft, wenn in der Suspension Abschaltpartikel mit einer mittleren Partikelgröße ($D_w$) größer oder gleich, vorzugsweise größer der mittleren Porengröße der Poren der porösen anorganischen Schicht ($d_s$) vorliegen, da so sichergestellt wird, dass die Poren der anorganischen Schicht bei der Herstellung des erfindungsgemäßen Separators nicht durch Abschaltpartikel verstopft werden. Bevorzugt weisen die eingesetzten Abschaltpartikel eine mittlere Partikelgröße ($D_w$) auf, die größer als der mittlere Porendurchmesser ($d_s$) und kleiner 5 $d_s$, besonders bevorzugt kleiner 2 $d_s$ beträgt.

Sollte es gewünscht sein Abschaltpartikel einzusetzen, die eine Partikelgröße kleiner der Porengröße der Poren der porösen anorganischen Schicht aufweisen, so muss vermieden werden, dass die Partikel in die Poren der porösen anorganischen Separatorschicht eindringen. Gründe für den Einsatz solcher Partikel können z. B. in großen Preisunterschieden aber auch in der Verfügbarkeit solcher Partikel liegen. Eine Möglichkeit das Eindringen der Abschaltpartikel in die Poren der porösen anorganischen Schicht zu verhindern besteht darin, die Viskosität der Suspension so einzustellen, dass in Abwesenheit von äußeren Scherkräften kein Eindringen der Suspension in die Poren der anorganischen Schicht des Separators erfolgt. Eine solch hohe Viskosität der Suspension kann z. B. dadurch erreicht werden, dass der Suspension Hilfsstoffe, die das Fließverhalten beeinflussen, wie z. B. Kieselsäuren (Aerosil, Degussa) hinzugefügt werden. Beim Einsatz von Hilfsstoffen wie z. B. Aerosil 200 ist häufig ein Anteil von 0,1 bis 50 Gew.-%, vorzugsweise 0,5 bis 10 Gew.-% Kieselsäure, bezogen auf die Suspension, schon ausreichend um eine genügend hohe Viskosität der Suspension zu erzielen. Der Anteil an Hilfsstoffen kann jeweils durch einfache Vorversuche ermittelt werden.

Es kann vorteilhaft sein, wenn die eingesetzte Abschaltpartikel aufweisende Suspension Haftvermittler aufweist. Eine solche Haftvermittler aufweisende Suspension kann direkt auf eine anorganische Schicht des Separators aufgebracht werden, auch wenn diese nicht vor dem Aufbringen hydrophobiert wurde. Natürlich kann eine Haftvermittler aufweisende Suspension auch auf eine hydrophobierte Schicht oder auf eine Separatorschicht, bei deren Herstellung ein Haftvermittler eingesetzt wurde, aufgebracht werden. Als Haftvermittler in der Abschaltpartikel aufweisenden Suspension werden vorzugsweise Silane eingesetzt, die Amino-, Vinyl- oder Methacrylseitengruppen aufweisen. Solche Haftvermittler sind z. B. AMEO (3-Aminopropyltriethoxysilan), MEMO (3-Methacryloxypropyl-trimethoxysilan), Silfin (Vinylsilan + Initiator + Katalysator), VTEO (Vinyltriethoxysilan) oder VTMO (Vinyltrimethoxysilan). Solche Silane sind z. B. von der Degussa auch in wässriger Lösung unter der Bezeichnung Dynasilan 2926, 2907 oder 2781 erhältlich. Ein Anteil von maximal 10 Gew.-% an Haftvermittler hat sich als ausreichend für die Sicherstellung einer genügend großen Haftung der Abschaltpartikel an der porösen anorganischen Schicht herausgestellt. Vorzugsweise weisen Haftvermittler aufweisende Suspensionen von Abschaltpartikeln von 0,1 bis 10 Gew.-%, bevorzugt von 1 bis 7,5 Gew.-% und ganz besonders bevorzugt von 2,5 bis 5 Gew.-% an Haftvermittler bezogen auf die Suspension auf.

Als Abschaltpartikel können alle Partikel eingesetzt werden, die einen definierten Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Schicht des Separators erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird.

Es kann vorteilhaft sein, wenn die Abschaltpartikel nach dem Aufbringen auf die poröse anorganische Schicht durch zumindest einmaliges Erwärmen auf eine Temperatur oberhalb der Glastemperatur, so dass ein Anschmelzen der Partikel ohne Änderung der eigentlichen Form erreicht wird, fixiert werden. Auf diese Weise kann erreicht werden, dass die Abschaltpartikel besonders gut an der porösen anorganischen Separatorschicht haften.

Das Aufbringen der die Abschaltpartikel aufweisenden Suspension mit anschließendem Trocknen sowie ein eventuelles Erwärmen über die Glasübergangstemperatur kann kontinuierlich oder quasi kontinuierlich durchgeführt werden. Wird eine flexibler Separator als Ausgangsmaterial eingesetzt, so kann diese wiederum von einer Rolle abgewickelt, durch eine Beschichtungs-, Trocknungs- und gegebenenfalls Erwärmungsapparatur geführt und anschließend wieder aufgerollt werden.

Erfindungsgemäß wird auch eine elektrochemische Zelle, insbesondere eine Lithium-Batterie, Lithiumionen-Batterie oder eine Lithium-Polymer-Batterie bereitgestellt, wobei die Zelle einen der oben beschriebenen Separatoren umfasst, der eine erste Schicht mit einer mittleren Porengröße von 50 bis 1000 nm und mindestens eine weitere Schicht mit einer mittleren Porengröße von 5 bis 400 nm aufweist.

Der Elektrolyt, der in einer solchen elektrochemischen Zelle eingesetzt wird, kann jeder übliche in elektrochemischen Zellen einsetzbare Elektrolyt sein. Als Beispiele können Lösungen eines löslichen Lithiumsalzes in einem oder mehreren organischen Lösemitteln, wie zum Beispiel Ethylencarbonat und Dimethylcarbonat (EC-DMC) genannt werden. Andere geeignete nicht wässerige Lösemittel schließen zum Beispiel γ-Butyrolacton, Tetrahydrofuran, 1,2-Dimethoxyethan, Propylencarbonat, Diethylcarbonat, Methylethylcarbonat, Diethoxyethan, Dioxolan und Methylformiat ein. Geeignete lösliche Lithiumsalze sind die üblicherweise verwendeten. Als Beispiele können $LiPF_6$, $LiAsF_6$, $LiBF_4$, $LiClO_4$, $LiCF_3SO_3$, $LiN(CF_3SO_2)_3$ und $LiN(C_2F_5SO_2)_3$ genannt werden, wobei $LiPF_6$ besonders bevorzugt ist.

Außerdem umfasst die vorliegende Erfindung die Verwendung eines erfindungsgemäßen Separators zur Herstellung einer elektrochemischen Zelle, insbesondere einer Lithium-Batterie, Lithiumionen-Batterie oder einer Lithium-Polymer-Batterie, jeweils bevorzugt für Hochstromanwendungen.

Vorzugsweise ist die elektrochemische Zelle wiederaufladbar.

Unter der mittleren Porengröße und der Porosität ist die Porengröße und Porosität zu verstehen, die nach der bekannten Methode der Quecksilber-Porosimetrie bestimmt werden kann mit einem Porosimeter 4000 von Carlo Erba Instruments. Der Quecksilber-Porosimetrie liegt die Washburn-Gleichung zu Grunde (E. W. Washburn, "Note on a Method of Determining the Distribution of Pore Sizes in a Porous Material", Proc. Natl. Acad. Sci., 7, 115-16 (1921)).

Im Allgemeinen kann festgestellt werden, dass - bei gleichbleibender Porosität und Tortuosität - je größer die Poren im Separator sind um so niedriger der sich einstellende Widerstand des mit Elektrolyt getränkten Separators ist. Eine häufig in diesem Zusammenhang benutzte Kenngröße eines Separators ist die Gurley-Zahl. Sie ist ein Maß für die Gasdurchlässigkeit des trockenen porösen Separators. Wie von O. Besenhard im "Handbook of Battery Materials" beschrieben, kann man direkt aus der Gurley Zahl auf die Leitfähigkeit eines bekannten Systems schließen. Verallgemeinert kann man festhalten, dass eine größere Gasdurchlässigkeit (d. h. kleinere Gurley-Zahl) eine um so höhere Leitfähigkeit des benetzten Separators in der Batteriezelle bewirkt. Die Werte der Gurley-Zahl kommerziell erhältlicher Separatoren liegen bei 10 bis 50, wenn der Porendurchmesser um 0,1 $\mu$m beträgt, und bei 20 bis 100, wenn der Porendurchmesser um 0,05 $\mu$m beträgt. (G. Venugiopal; J. of Power Sources 77 (1999) 34-41).

Die bei den Beispielen und Referenzbeispielen angegebene Gurley-Zahl ist folgendermaßen definiert. Die Gurley-Zahl ist die Zeit in Sekunden, die benötigt wird bis 100 ml Luft durch eine Separatorfläche von 6,45 cm$^2$ bei einem Druck von 31 cm Wassersäule geflossen sind.

Die MacMullin-Zahl ist wie folgt definiert:

$$\text{MacMullin-Zahl} = \frac{\text{Leitfähigkeit des reinen Elektrolyten, gemessen bei 2,4 kHz}}{\text{Leitfähigkeit des mit Elektrolyt gefüllten Separators, gemessen bei 2,4 kHz}}$$

Die MacMullin-Zahl ist immer größer oder gleich 1. Sie beschreibt eine Art "Verdünnung" des Elektrolyten. Wenn die MacMullin-Zahl zum Beispiel den Wert 3 hat, beträgt die Porosität ca. 33 % bei der Tortuosität = 1.

Die Fig. 1A und 1B zeigen: REM-Aufnahmen des in Referenzbeispiel 4 hergestellten Separators mit symmetrischem Porengefüge.

Die Fig. 2A und 2B zeigen REM-Aufnahmen der zweiten porösen Schicht des in Beispiel 6 hergestellten Separators mit asymmetrischem Porengefüge.

Die Fig. 3A und 3B zeigen REM-Aufnahmen der zweiten porösen Schicht des in Beispiel 4 hergestellten Separators mit asymmetrischem Porengefüge.

Die vorliegende Erfindung wird nun im Folgenden anhand von Beispielen, Test- und Referenzbeispielen beschrieben.

**Beispiele, Test- und Referenzbeispiele**

**Referenzbeispiel 1: Herstellung eines S100PET Separators**

Zu 145 g Wasser werden zunächst 30 g einer 5 Gew.-%igen, wässerigen HCI-Lösung, 10 g Tetraethoxysilan, 2,5 g Methyltriethoxysilan und 7,5 g Dynasilan GLYMO gegeben. In diesem Sol, das zunächst für einige Stunden weiter gerührt wurde, wurden dann 140 g des Aluminiumoxids AlCoA CT3000 suspendiert. Diese Suspension (Schlicker) wird für mindestens weitere 72 h mit einem Magnetrührer homogenisiert, wobei das Rührgefäß abgedeckt werden muss, damit es nicht zu einem Lösemittelverlust kommt.

Ein 56 cm breites PET-Vlies mit einer Dicke von ca. 13 $\mu$m und einem Flächengewicht von etwa 6 g/m$^2$ wird dann in einem kontinuierlichen Aufwalzverfahren (Bandgeschwindigkeit ca. 30 m/h, T = 200 °C) mit der obigen Suspension beschichtet. Man

erhält auf diese Weise einen Separator mit einer mittleren Porenweite von 80 nm, der eine sehr gute Haftfestigkeit und eine Dicke von ca. 24 $\mu$m aufweist. Die Gurley-Zahl beträgt etwa 65, die MacMullin-Zahl 5,5.

**Referenzbeispiel 2: Herstellung eines S240PET Separators**

Zu 140 g Wasser und 10 g Ethanol werden zunächst 30 g einer 5 Gew.-%igen, wässerigen HCl-Lösung, 10 g Tetraethoxysilan, 2,5 g Methyltriethoxysilan und 7,5 g Dynasilan GLYMO gegeben. In diesem Sol, das zunächst für einige Stunden gerührt wurde, werden dann 265 g des Aluminiumoxids AlCoA CT1200 SG suspendiert. Diese Suspension (Schlicker) wird für mindestens weitere 24 h mit einem Magnetrührer homogenisiert, wobei das Rührgefäß abgedeckt werden muss, damit es nicht zu einem Lösemittelverlust kommt.

Ein 56 cm breites PET-Vlies mit einer Dicke von ca. 13 $\mu$m und einem Flächengewicht von etwa 6 g/m$^2$ wird dann in einem kontinuierlichen Aufwalz-verfahren (Bandgeschwindigkeit ca. 30 m/h, 7 = 200 °C) mit obigem Schlicker beschichtet. Man erhält auf diese Weise einen Separator mit einer mittleren Porenweite von 240 nm, der eine sehr gute Haftfestigkeit und eine Dicke von ca. 27 $\mu$m aufweist. Die Gurley-Zahl beträgt etwa 12, die MacMullin-Zahl 3,5.

**Referenzbeispiel 3: Herstellung eines S450PET Separators**

Zu 130 g Wasser und 15 g Ethanol werden zunächst 30 g einer 5 Gew.-%igen, wässerigen HNO$_3$-Lösung, 10 g Tetraethoxysilan, 2,5 g Methyltriethoxysilan und 7,5 g Dynasilan GLYMO gegeben. In diesem Sol, das zunächst für einige Stunden gerührt wurde, werden dann jeweils 125 g der Aluminiumoxide Martoxid MZS-1 und Martoxid MZS-3 suspendiert. Diese Suspension (Schlicker) wird für mindestens weitere 24 h mit einem Magnetrohrer homogenisiert, wobei das Rührgefäß abgedeckt werden muss, damit es nicht zu einem Lösemittelverlust kommt.

Ein 56 cm breites PET-Vlies mit einer Dicke von ca. 13 $\mu$m und einem Flächengewicht von etwa 6 g/m$^2$ wird dann in einem kontinuierlichen Aufwalzverfahren (Bandgeschwindigkeit ca. 30 m/h, T = 200 °C) mit der obigen Suspension beschichtet. Man erhält auf diese Weise einen Separator mit einer mittleren Porenweite von 450 nm, der eine sehr gute Haftfestigkeit und eine Dicke von ca. 29 $\mu$m aufweist. Die Gurley-Zahl beträgt etwa 6, die MacMullin-Zahl 3,4.

**Referenzbeispiel 4: Herstellung eines S800PET Separators**

Zu 130 g Wasser und 15 g Ethanol werden zunächst 30 g einer 5 Gew.-%igen, wässerigen HCl-Lösung, 10 g Tetraethoxysilan, 2,5 g Methyltriethoxysilan und 7,5 g Dynasilan GLYMO gegeben. In diesem Sol, das zunächst für einige Stunden gerührt wurde, werden dann 280 g des Aluminiumoxids AlCoA CT800 SG suspendiert. Diese Suspension (Schlicker) wird für mindestens weitere 24 h mit einem Magnetrührer homogenisiert, wobei das Rührgefäß abgedeckt werden muss, damit es nicht zu einem Lösemittelverlust kommt.

Ein 56 cm breites PET-Vlies mit einer Dicke von ca. 35 um und einem Flächengewicht von etwa 18 g/m$^2$ wird dann in einem kontinuierlichen Aufwalzverfahren (Bandgeschwindigkeit ca. 30 m/h, T = 200 °C) mit obigem Schlicker beschichtet. Man erhält auf diese Weise einen Separator mit einer mittleren Porenweite von 800 nm, der eine sehr gute Haftfestigkeit und eine Dicke von ca. 55 $\mu$m aufweist. Die Gurley-Zahl beträgt etwa 5,7, die MacMullin-Zahl 2,5.

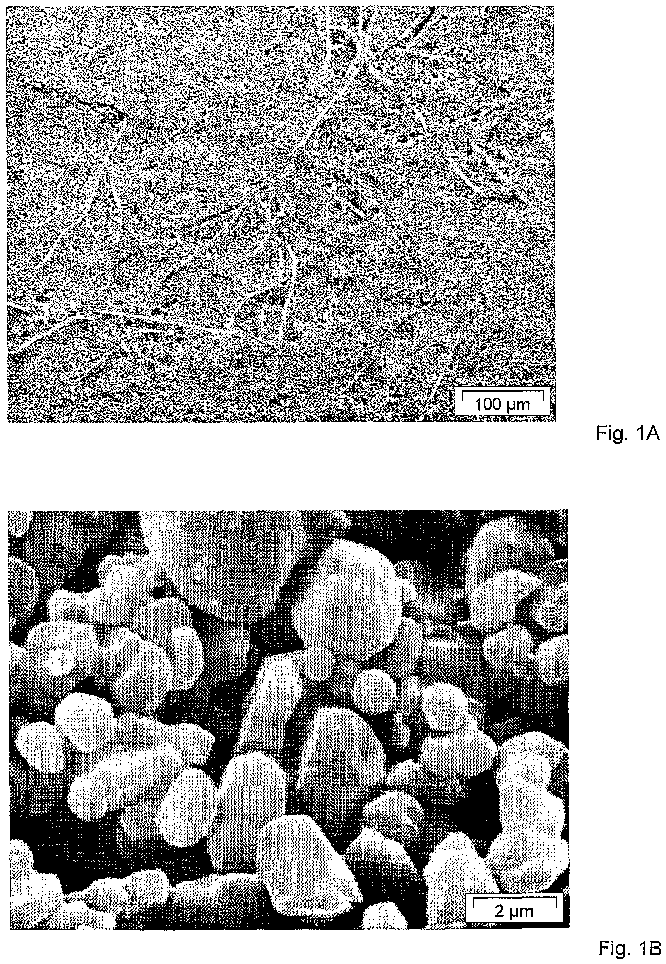

REM-Aufnahmen des Separators: Siehe Fig. 1A und 1B. In Fig. 1A beträgt der rechts unten im Eck dargestellte Maßstab 100 $\mu$m, in Fig. 1B beträgt er 2 $\mu$m.

**Testbeispiel 1: Lithium Batterie mit S100PET-Separator aus Referenzbeispiel 1**

Der in Referenzbeispiel 1 hergestellte S100PET-Separator wurde in eine Li-Ionen-Zelle, bestehend aus einer Positiv-Masse aus LiCoO$_2$, einer Negativ-Masse bestehend aus Graphit und einem Elektrolyten aus LiPF$_6$ in Ethylencarbonat/ Dimethylcarbonat (EC/DC), eingebaut [LiCoO$_2$ // S100PET, EC/DMC 1:1, 1M LiPF$_6$ // Graphit]. Es wurde das Ladeverhalten dieser Batterie überprüft. Die Batterie zeigte nach mehr als 250 Zyklen, die mit C/5 gefahren wurden, nur einen geringen Abfall der Kapazität um wenige Prozentpunkte. Auch eine Erhöhung der Ladespannung von 4,1 auf 4,2 Volt im 200sten Ladezyklus schadete der Batterie nicht.

Bei einer Erhöhung der Belastung auf 1C kam es aber beim Entladen zu einem Abfall der Kapazität der Zelle, d. h. es konnte der Zelle nicht die gesamte zur Verfügung stehende Kapazität entnommen werden. Dies ist auf den vergleichsweise hohen Innenwiderstand der Zelle zurückzuführen. Der hohe Innenwiderstand lässt sich an der hohen Gurley- und MacMullin-Zahl des Separators vorhersagen. Zu keiner Zeit wurde an der Zelle ein Kurzschluss beobachtet.

**Testbeispiel 2: Lithium Batterie mit S800PET-Separator aus Referenzbeispiel 4**

Der in Referenzbeispiel 4 hergestellte S800PET-Separator wurde in eine Li-Ionen-Zelle, bestehend aus einer Positiv-Masse aus LiCoO$_2$, einer Negativ-Masse bestehend aus Graphit und einem Elektrolyten aus LiPF$_6$ in Ethylencarbonat/ Dimethylcarbonat (EC/DMC), eingebaut [LiCoO$_2$ // S800PET, EC/DMC 1:1, 1M LiPF$_6$ // Graphit]. Es wurde das Ladeverhalten dieser Batterie überprüft. Die Batterie zeigte nach mehr als 250 Zyklen nur einen geringen Abfall der Kapazität um wenige Prozentpunkte. Auch eine Erhöhung der Ladespannung von 4,1 auf 4,2 Volt im 200sten Ladezyklus schadete der Batterie nicht.

Diese Zelle konnte sowohl mit kleinen Belastungen, (wie etwa C/5) aber auch mit größeren Belastungen ab 1 C betrieben werden, ohne dass es, wie im Testbeispiel 1, zu einer Einbuße der Kapazität kam. Mit dem S800PET-Separator wies die Batterie also einen vergleichsweise geringen Innenwiderstand auf. Der geringe Innenwiderstand lässt sich an der niedrigen Gurley- und MacMullin-Zahl des Separators vorhersagen. Allerdings wurden bei diesen Zellen häufig Ausfälle beobachtet, die auf interne Kurzschlüsse zurückzuführen sind. Diese Kurzschlüsse werden begünstigt durch die vergleichsweise großen Poren im Separator.

**Herstellung asymmetrischer Separatoren (nicht erfindungegemäß)**

**Beispiel 1: Herstellung eines Z025$^A$PET Separators**

Eine Suspension, bestehend aus 3,0 Gew.-% nanopartikularem Zirkonoxid (VPH, Fa. Degussa), 1 Gew.-% Zirkonoxid-Sol (Fa. MEL) und 1,0 Gew.-% Aerosil 300 (Fa. Degussa) als Viskositätsregulator in vollentsalztem Wasser, wurde auf einen Separator S100PET aus Referenzbeispiel 1 in einem kontinuierlichen Aufwalzverfahren (Bandgeschwindigkeit ca. 8 m/h, T = 220 °C) aufgebracht und verfestigt.

Es wurde ein Separator mit einer mittleren Porenweite der asymmetrischen Schicht von ca. 25 nm erhalten, der eine sehr gute Haftfestigkeit und Dicke von ca. 27 μm aufwies. Die Herstellung eines reinen, nicht asymmetrischen Z025-Separators war nicht möglich. Die Gurley-Zahl betrug etwa 261.

**Beispiel 2: Herstellung eines T010$^A$PET Separators**

Zu einer Mischung aus 1809 VE-Wasser und 0,69 g einer 65%igen Salpetersäure wurde langsam eine Mischung aus 14,21 g Titantetraisopropylat (Fluka) in 27,1 g iPropanol getropft. Die Peptisierung des entstehenden Titandioxids erfolgt über einen Zeitraum von 17 Tagen unter gelegentlichem Rühren. Das so hergestellte Sol wird dann zu einer Beschichtungssuspension weiterverarbeitet. Dazu wird eine Suspension, bestehend aus 0,3 Vol% $TiO_2$ (aus dem oben beschriebenen Sol) mit 0,2 Vol% Carbopol 980 vermischt und auf den Separator aus Beispiel 1 aufgetragen. (Bandgeschwindigkeit ca. 16 m/h, T = 220 °C).

Es wurde ein Separator mit einer mittleren Porenweite der asymmetrischen Schicht von ca. 10 nm erhalten, der eine sehr gute Haftfestigkeit und Dicke von ca. 29 μm aufwies. Die Gurleyzahl betrug etwa 410. Die Herstellung eines reinen, nicht asymmetrischen T010PET-Separators war nicht möglich.

**Beispiel 3: Herstellung eines Z100$^A$PET Separators**

250 g des Aluminiumoxids AlCoA CT3000 SG und 6 g Aerosil200 (Degussa AG) werden in einem Gemisch aus 220 g Wasser, 15 g Ethanol, 5 g einer 5 Gew.-%igen, wässerigen $HNO_3$-Lösung und 50 g 30 Gew.-%igem Zirkoniumoxid-Sol (Fa. MEL) dispergiert. Diese Suspension (Schlicker) wird für mindestens 72 h mit einem Magnetrührer homogenisiert, wobei das Rührgefäß abgedeckt werden muss, damit es nicht zu einem Lösemittelverlust kommt.

Der auf diese Weise homogenisierte Schlicker wurde auf einen Separator S45OPET aus Referenzbeispiel 3 in einem kontinuierlichen Aufwalzverfahren (Bandgeschwindigkeit ca. 15 m/h, T = 220 °C) aufgebracht und verfestigt.

Es wurde ein Separator mit einer mittleren Porenweite der asymmetrischen Schicht von ca. 80 nm erhalten, der eine sehr gute Haftfestigkeit und Dicke von ca. 33 μm aufwies. Die Gurley-Zahl betrug etwa 50, die MacMullin-Zahl 5.

**Beispiel 4: Herstellung eines Z100$^A$PET Separators**

250 g des Aluminiumoxids AlCoA CT3000 SG und 6 g Aerosil200 (Degussa AG) werden in einem Gemisch aus 220 g Wasser, 15 g Ethanol, 5 g einer 5 Gew.-%igen, wässerigen $HNO_3$-Lösung und 50 g 30 Gew.-%igem Zirkoniumoxid-Sol (Fa. MEL) dispergiert. Diese Suspension (Schlicker) wird für mindestens 72 h mit einem Magnetrührer homogenisiert, wobei das Rührgefäß abgedeckt werden muss, damit es nicht zu einem Lösemittelverlust kommt.

Der auf diese Weise homogenisierte Schlicker wurde auf einen Separator S80OPET aus Referenzbeispiel 4 in einem kontinuierlichen Aufwalzverfahren (Bandgeschwindigkeit ca. 15 m/h, T = 220 °C) aufgebracht und verfestigt.

Es wurde ein Separator mit einer mittleren Porenweite der asymmetrischen Schicht von ca. 80 nm erhalten, der eine sehr gute Haftfestigkeit und Dicke von ca. 61 μm aufwies. Die Gurley-Zahl betrug etwa 68, die MacMullin-Zahl 3,9.

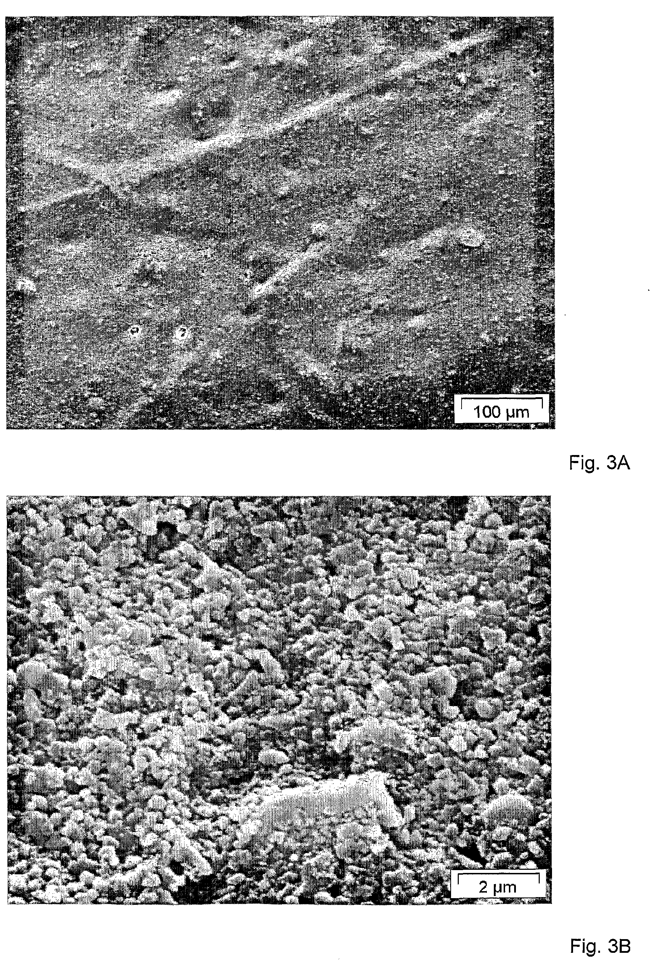

REM-Aufnahmen des Separators: Siehe Fig. 3A und 3B. In den Figuren 3A und 3B ist jeweils die zweite poröse Schicht eines Separators abgebildet. In Fig. 3A beträgt der rechts unten im Eck dargestellte Maßstab 100 μm, in Fig. 3B beträgt er 2 μm. Die erste poröse Schicht des Separators weist eine Porosität auf wie sie in Fig. 1A und 1B gezeigt sind.

**Beispiel 5: Herstellung eines Z240$^A$ PET Separators**

250 g des Aluminiumoxids AlCoA CT3000 SG und 6 g Aerosil200 (Degussa AG) werden in einem Gemisch aus 220 g Wasser, 15 g Ethanol, 5 g einer 5 Gew.-%igen, wässerigen $HNO_3$-Lösung und 50g 30 Gew.-%igem Zirkoniumoxid-Sol (Fa. MEL) dispergiert. Diese Suspension (Schlicker) wird für mindestens 72 h mit einem Magnetrührer homogenisiert, wobei das Rührgefäß abgedeckt werden muss, damit es nicht zu einem Lösemittelverlust kommt.

Der auf diese Weise homogenisierte Schlicker wurde auf einen Separator S45OPET aus Referenzbeispiel 3 in einem kontinuierlichen Aufwalzverfahren (Bandgeschwindigkeit ca. 15 m/h, T = 220 °C) aufgebracht und verfestigt.

Es wurde ein Separator mit einer mittleren Porenweite der asymmetrischen Schicht von ca. 240 nm erhalten, der eine sehr gute Haftfestigkeit und Dicke von ca. 33 μm aufwies. Die Gurley-Zahl betrug etwa 20, die MacMullin-Zahl 4,1.

**Beispiel 6: Herstellung eines Z240$^A$PET Separators**

250 g des Aluminiumoxids AlCoA CT3000 SG und 6 g Aerosil200 (Degussa AG) werden in einem Gemisch aus 220 g Wasser, 15 g Ethanol, 5 g einer 5 Gew.-%igen, wässerigen $HNO_3$-Lösung und 50 g 30 Gew.-%igem Zirkoniumoxid-Sol (Fa. MEL) dispergiert. Diese Suspension (Schlicker) wird für mindestens 72 h mit einem Magnetrührer homogenisiert, wobei das Rührgefäß abgedeckt werden muss, damit es nicht zu einem Lösemittelverlust kommt.

Der auf diese Weise homogenisierte Schlicker wurde auf einen Separator S800PET aus Referenzbeispiel 4 in einem kontinuierlichen Aufwalzverfahren (Bandgeschwindigkeit ca. 15 m/h, T = 220 °C) aufgebracht und verfestigt.

Es wurde ein Separator mit einer mittleren Porenweite der asymmetrischen Schicht von ca. 240 nm erhalten, der eine sehr gute Haftfestigkeit und Dicke von ca. 35 μm aufwies. Die Gurley-Zahl betrug etwa 25, die MacMullin-Zahl 3,7.

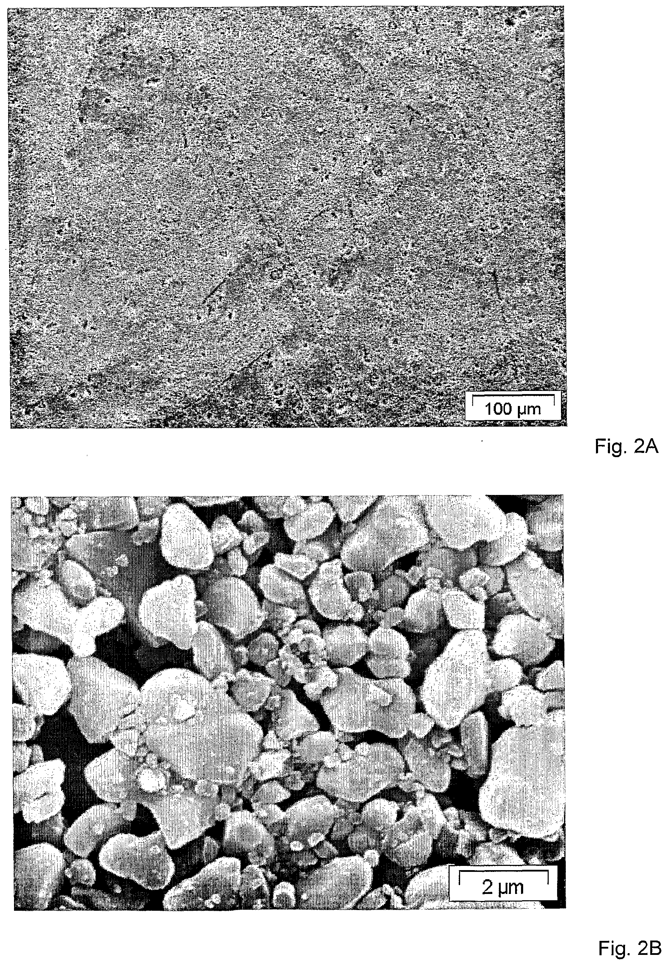

REM-Aufnahmen des Separators: Siehe Fig. 2A und 2B. In den Figuren 2A und 2B ist jeweils die zweite poröse Schicht eines Separators abgebildet. In Fig. 2A beträgt der rechts unten im Eck dargestellte Maßstab 100 μm, in Fig. 2B beträgt er 2 μm. Die erste poröse Schicht des Separators weist eine Porosität auf wie sie in Fig. 1A und 1B gezeigt sind.

**Testbeispiel 3: Lithium Batterie mit dem asymmetrischen Z100$^A$PET-Separator**

Der in Beispiel 4 hergestellte Z100$^A$PET-Separator wird in eine Li-Ionen-Zelle, bestehend aus einer Positiv-Masse aus $LiCoO_2$, einer Negativ-Masse bestehend aus Graphit und einem Elektrolyten aus $LiPF_6$ in Ethylencarbonat/Dimethylcarbonat (EC/DMC), eingebaut [$LiCoO_2$// Z100$^A$PET EC/DMC 1:1, 1M $LiPF_6$ // Graphit], so dass die Schicht mit den kleinen Poren der Graphit-Anode zugewandt war. Es wurde das Ladeverhalten dieser Batterie überprüft. Die Batterie zeigte nach mehr als 500 Zyklen einen sehr geringen Abfall der Kapazität um wenige Prozentpunkte. Auch eine Erhöhung der Ladespannung von 4,1 auf 4,2 Volt im 450sten Ladezyklus schadete der Batterie nicht.

Diese Zelle konnte sowohl mit kleinen Belastungen, (wie etwa C/5) aber auch mit größeren Belastungen ab 1C betrieben werden, ohne dass es wie im Testbeispiel 1 zu einer Einbuße der Kapazität kam. Mit dem Z100$^A$PET-Separator weist die Batterie also einen vergleichsweise geringen Innenwiderstand auf. Der geringe Innenwiderstand lässt sich anhand der Gurley- und MacMullin-Zahl des Separators vorhersagen. Im Gegensatz zu Testbeispiel 2 kam es bei dem Separator zu keinen Ausfällen der Batterie, die auf interne Kurzschlüsse zurückzuführen sind.

Die Separatoren vereinen also die Vorteile von großen Poren, die geringe Innenwiderstände ergeben und kleinen Poren beim Kontakt zu den Elektroden, die Kurzschlüsse vermeiden helfen.

**Patentansprüche**

1. Separator für eine elektrochemische Zelle, umfassend

   (A) einen flexiblen, durchbrochenen Träger, und
   (B) ein poröses Keramikmaterial mit dem die Durchbrechungen des Trägers gefüllt sind,
   wobei das Keramikmaterial zur Aufnahme eines ionenleitenden Elektrolyten geeignet ist,

   wobei das poröse Keramikmaterial eine erste poröse Schicht umfasst, die durch eine mittlere Porengröße gekennzeichnet ist sowie zumindest eine zweite poröse Schicht zum in Kontakt bringen mit einer Elektrode, wobei die zweite poröse Schicht eine mittlere Porengröße aufweist, die kleiner ist als die mittlere Porengröße der ersten porösen Schicht,
   wobei zwischen der ersten und zweiten Schicht eine oder mehrere Zwischenschichten vorliegen, deren mittlere Porengrößen jeweils kleiner ist als die mittlere Porengröße der benachbarten Schicht, die in Richtung der ersten Schicht liegt, und größer ist als die mittlere Porengröße der Schicht, die in Richtung der zweiten Schicht liegt.

**2.** Der Separator nach Anspruch 1,
**dadurch gekennzeichnet,**
**dass** das poröse Keramikmaterial auf der Seite der ersten porösen Schicht, die der Seite der zweiten porösen Schicht gegenüberliegt, eine dritte poröse Schicht zur Kontaktierung einer gegenpoligen Elektrode umfasst, wobei die dritte Schicht eine mittlere Porengröße aufweist, die geringer ist als die mittlere Porengröße der ersten Schicht.

**3.** Der Separator nach Anspruch 1,
**dadurch gekennzeichnet,**
**dass** die mittlere Porengröße der zweiten und/oder gegebenenfalls der dritten Schicht im Bereich von 0,1 bis 50 %, der mittleren Porengröße der ersten Schicht liegt.

**4.** Der Separator nach einem der vorstehenden Ansprüche, **dadurch gekennzeichnet, dass** die mittlere Porengröße der ersten Schicht im Bereich von 80 bis 1000 nm, insbesondere 450 bis 800 nm liegt.

**5.** Der Separator nach einem der vorstehenden Ansprüche,
**dadurch gekennzeichnet,**
**dass** die mittlere Porengröße der zweiten Schicht und/oder gegebenenfalls der dritten Schicht im Bereich von 5 bis 250 nm, insbesondere 25 bis 150 nm liegt.

**6.** Der Separator nach Anspruch 2 allein oder in Kombination mit wenigstens einem der Ansprüche 3 bis 5,
**dadurch gekennzeichnet,**
**dass** zwischen der ersten und dritten Schicht eine oder mehrere Zwischenschichten vorliegen, deren mittlere Porengrößen jeweils kleiner ist als die mittlere Porengröße der benachbarten Schicht, die in Richtung der ersten Schicht liegt, und größer als die mittlere Porengröße der Schicht, die in Richtung der dieser Seite zugeordneten Elektrode ist.

**7.** Der Separator nach einem der vorstehenden Ansprüche, wobei, ausgehend von der ersten Schicht in Richtung der einer Elektrode zugeordneten zweiten und/oder gegebenenfalls dritten Schicht, benachbarte Schichten jeweils eine mittlere Porengröße aufweisen, die von 20 bis 50 % der mittleren Porengröße der Ausgangsschicht beträgt.

**8.** Der Separator nach einem der vorstehenden Ansprüche, wobei das poröse Keramikmaterial ein Oxid von Zirkonium, Silizium und/oder vorzugsweise Aluminium umfasst.

**9.** Der Separator nach einem der vorstehenden Ansprüche, wobei das Keramikmaterial herstellbar ist durch Verfestigung eines Schlickers, der Teilchen mit einer großen mittleren Teilchengröße enthält, die die Porenstruktur des Keramikmaterials bestimmen, sowie Teilchen mit einer kleineren mittleren Primärteilchengröße, die bei der Verfestigung des Schlickers die großen Teilchen verkleben.

**10.** Der Separator nach Anspruch 9, wobei die Oberfläche der Teilchen, die die Schichten bilden, zusätzlich $SiO_2$, $Al_2O_3$, $ZrO_2$ oder SiC umfassen.

**11.** Der Separator nach einem der vorstehenden Ansprüche, wobei die Schichten $Li_2CO_3$, $Li_3N$, $LiAlO_3$, oder $Li_xAl_yTi_z(PO_4)_3$ mit $1 \leq x \leq 2$, $0 \leq y \leq 1$ und $1 \leq z \leq 2$, umfassen.

**12.** Der Separator nach einem der vorstehenden Ansprüche, der einen Elektrolyten zur Ionenleitung umfasst.

**13.** Der Separator nach einem der vorstehenden Ansprüche, wobei der Separator eine Porosität von 15 bis 80 %, vorzugsweise von 20 % bis 45 % aufweist.

**14.** Der Separator nach einem der vorstehenden Ansprüche, wobei der durchbrochene Träger Polymerfasern, bevorzugt ausgewählt aus Fasern von Polyamid, Polyacrylnitril, Polyester und/oder Polyolefin, Glasfasern oder Keramikfasern, umfasst.

**15.** Der Separator nach einem der vorstehenden Ansprüche, wobei der Träger Fasern und/oder Filamente mit einem Durchmesser von 1 bis 150 $\mu$m, vorzugsweise 1 bis 20 $\mu$m, und/oder Fäden mit einem Durchmesser von 3 bis 150 $\mu$m, vorzugsweise 10 bis 70 $\mu$m, umfasst.

**16.** Der Separator nach einem der vorstehenden Ansprüche, wobei der Träger ein Vlies mit einer Porenweite von 5 bis 500 $\mu$m, vorzugsweise 10 bis 200 $\mu$m, ist.

17. Der Separator nach einem der vorstehenden Ansprüche, der unter Einsatzbedingungen bei mindestens 100 °C, vorzugsweise bei mindestens 150 °C, und ganz besonders bevorzugt bei mindestens 180 °C, stabil ist.

18. Der Separator nach einem der vorstehenden Ansprüche, der eine Dicke im Bereich von 10 bis 1000 $\mu$m, vorzugsweise 10 bis 100 $\mu$m, ganz besonders bevorzugt 10 bis 50 $\mu$m aufweist.

19. Der Separator nach einem der vorstehenden Ansprüche, der einen Biegeradius bis herab zu 100 mm, vorzugsweise bis herab zu 20 mm, ganz besonders bevorzugt bis herab zu 1 mm toleriert.

20. Verfahren zur Herstellung eines Separators für eine elektrochemische Zelle nach einem der Ansprüche 1 bis 19 umfassend folgende Stufen:

(a) Aufbringen einer Dispersion als dünne Schicht auf und in ein Gewebe und/oder Vlies, wobei die Dispersion

(a1) große Keramikteilchen deren mittlere Teilchengröße eine Porenstruktur der Schicht bereitstellt, die durch einen mittleren Porendurchmesser gekennzeichnet ist sowie
(a2) Keramikteilchen mit einer mittleren Primärteilchengröße, die geringer ist als die mittlere Teilchengröße der Keramikteilchen gemäß (a1), umfasst,

(b) Verfestigen der Dispersion bei einer Temperatur von 100°C bis 680°C, um eine erste Schicht aus porösem Keramikmaterial zu schaffen,
(c) Schaffen einer oder mehrerer Zwischenschichten auf einer Seite der ersten Schicht aus porösem Keramikmaterial,
(d) Aufbringen einer weiteren Dispersion auf die bezüglich der ersten Schicht aus porösem Keramikmaterial äußerste in Stufe (c) geschaffene Zwischenschicht aus porösem Keramikmaterial, wobei die weitere Dispersion folgendes umfasst:

(d1) Keramikteilchen, deren Teilchengröße eine Porenstruktur bereitstellt, deren mittlere Porengröße kleiner ist als die mittlere Porengröße der Schicht aus porösem Keramikmaterial, die mit der Dispersion beschichtet wird, und
(d2) gegebenenfalls Keramikteilchen mit einer mittleren Primärteilchengröße, die geringer ist als die mittlere Teilchengröße der Keramikteilchen gemäß (d1) sowie

(e) Verfestigen bei einer Temperatur von etwa 100 °C bis 680 °C, um eine weitere Schicht aus porösem Keramikmaterial zu schaffen,
wobei in Stufe (c) eine oder mehrere Zwischenschichten geschaffen werden, deren mittlere Porengrößen jeweils kleiner ist als die mittlere Porengröße der benachbarten Schicht, die in Richtung der ersten Schicht liegt, und größer ist als die mittlere Porengröße der Schicht, die in Richtung der zweiten Schicht liegt.

21. Das Verfahren nach Anspruch 20, wobei, ausgehend von der ersten Schicht in Richtung der einer Elektrode zugeordneten zweiten Schicht, benachbarte Schichten geschaffen werden, welche jeweils eine mittlere Porengröße aufweisen, die von 20 bis 50 % der mittleren Porengröße der Ausgangsschicht beträgt.

22. Das Verfahren nach Anspruch 20 oder 21, wobei die Keramikteilchen ein Material umfassen, das ausgewählt ist aus der Gruppe, bestehend aus Aluminiumoxid, Siliciumoxid und Zirkoniumoxid oder aus deren Mischoxiden oder Mischungen davon.

23. Das Verfahren nach einem der Ansprüche 20 bis 22, wobei die Keramikteilchen mit einer kleinen mittleren Teilchengröße herstellbar sind durch Hydrolyse und Peptisierung einer oder mehrerer Verbindungen, die ausgewählt sind aus einem Nitrat, Oxynitrat, Chlorid, Oxychlorid, Carbonat, Alkoholat, Acetat oder Acetylacetonat von Zirkonium, Silizium oder Aluminium.

24. Das Verfahren nach einem der Ansprüche 20 bis 23, wobei die Oberfläche der Teilchen, die die Schichten bilden, zusätzlich $SiO_2$, $Al_2O_3$, $ZrO_2$ oder $SiC$ umfassen.

25. Das Verfahren nach einem der Ansprüche 20 bis 23, wobei die Oberfläche der Teilchen, die die Schichten bilden, zusätzlich $Li_2CO_3$, $Li_3N$, $LiAlO_3$, oder $Li_xAl_yTi_z(PO_4)_3$ mit $1 \leq x \leq 2$, $0 \leq y \leq 1$ und $1 \leq z \leq 2$, umfassen.

**26.** Das Verfahren nach einem der Ansprüche 20 bis 25, wobei die Dispersion in Schritt (a) und/oder (d) zumindest ein Oxid der Elemente Al, Zr und/oder Si und ein Sol von zumindest einem der Elemente Al, Si und/oder Zr aufweist.

**27.** Das Verfahren nach einem der Ansprüche 20 bis 26, wobei das Gewebe und/oder Vlies Fasern enthält, die ausgewählt sind aus Polyamid, Polyacrylnitril, Polyester oder Polyolefin.

**28.** Das Verfahren nach einem der Ansprüche 20 bis 27 wobei die Dispersion durch Aufdrucken, Aufpressen, Einpressen, Aufrollen, Aufrakeln, Aufstreichen, Tauchen, Spritzen oder Aufgießen aufgebracht wird.

**29.** Das Verfahren nach einem der Ansprüche 20 bis 28, wobei zur Herstellung der Keramikteilchen gemäß (a2) und/oder (d2) zumindest eine Alkoholatverbindung der Elemente Zr, Al und/oder Si oder zumindest ein Nitrat, Carbonat oder Halogenid der Elemente Zr, Al und/oder Si hydrolisiert wird.

**30.** Das Verfahren nach einem der Ansprüche 20 bis 29, wobei die Keramikteilchen gemäß (a2) und/oder (d2) eine mittlere Primärpartikelgröße von 7 bis 50 nm aufweisen.

**31.** Das Verfahren nach einem der Ansprüche 20 bis 29, wobei das Verfestigen über 0,5 bis 10 Minuten bei einer Temperatur von 200 bis 280 °C erfolgt.

**32.** Elektrochemische Zelle, insbesondere eine Lithium-Batterie, Lithiumionen-Batterie oder eine Lithium-Polymer-Batterie, wobei die Zelle einen Separator nach einem der Ansprüche 1 bis 19 umfasst, der eine erste Schicht mit einer mittleren Porengröße von 50 bis 1000 nm und mindestens eine weitere Schicht mit einer mittleren Porengröße von 5 bis 400 nm aufweist.

**33.** Verwendung eines Separators nach einem der Ansprüche 1 bis 19 zur Herstellung einer elektrochemischen Zelle, insbesondere einer Lithium-Batterie, Lithiumionen-Batterie oder einer Lithium-Polymer-Batterie, jeweils bevorzugt für Hochstromanwendungen.


**Claims**

**1.** Separator for an electrochemical cell, comprising

    (A) a flexible perforate support, and
    (B) a porous ceramic material which fills the perforations in the support and is suitable for receiving an ion-conducting electrolyte,
    wherein the porous ceramic material comprises a first porous layer which is **characterized by** an average pore size and also at least one second porous layer for contacting with an electrode, the second porous layer having an average pore size which is smaller than the average pore size of the first porous layer,
    wherein between the first and second layers there is or are disposed one or more interlayers whose average pore sizes are each less than the average pore size of the adjacent layer which is in the direction of the first layer and are greater than the average pore size of the layer which is in the direction of the second layer.

**2.** Separator according to Claim 1, **characterized in that** the porous ceramic material comprises on that side of the first porous layer which is opposite the side of the second porous layer a third porous layer for contacting an electrode of opposite polarity, the third layer having an average pore size which is less than the average pore size of the first layer.

**3.** Separator according to Claim 1, **characterized in that** the average pore size of the second and/or optionally the third layer is in the range from 0.1 to 50% of the average pore size of the first layer.

**4.** Separator according to any preceding claim, **characterized in that** the average pore size of the first layer is in the range from 80 to 1 000 nm and especially in the range from 450 to 800 nm.

**5.** Separator according to any preceding claim, **characterized in that** the average pore size of the second layer and optionally of the third layer is in the range from 5 to 250 nm and especially in the range from 25 to 150 nm.

**6.** Separator according to Claim 2 alone or in combination with at least one of Claims 3 to 5, **characterized in that** between the first and third layers there is or are disposed one or more interlayers whose average pore sizes are each less than the average pore size of the adjacent layer which is in the direction of the first layer and greater than the average pore size of the layer which is in the direction of the electrode assigned this side.

7. Separator according to any preceding claim, wherein, starting from the first layer in the direction of the second and/or optionally third layer assigned an electrode, adjacent layers each have an average pore size which is from 20 to 50% of the average pore size of the starting layer.

8. Separator according to any preceding claim, wherein the porous ceramic material comprises an oxide of zirconium, silicon and/or preferably aluminum.

9. Separator according to any preceding claim, wherein the ceramic material is producible by solidifying a slip which contains particles having a large average particle size which determine the pore structure of the ceramic material and also particles having a smaller average primary particle size which adhere the large particles together in the course of the solidification of the slip.

10. Separator according to Claim 9, wherein the surface of the particles which form the layers additionally comprise $SiO_2$, $Al_2O_3$, $ZrO_2$ or SiC.

11. Separator according to any preceding claim, wherein the layers comprise $Li_2CO_3$, $Li_3N$, $LiAlO_3$, or $Li_xAl_yTi_z(PO_4)_3$ where $1 \leq x \leq 2$, $0 \leq y \leq 1$ and $1 \leq z \leq 2$.

12. Separator according to any preceding claim, comprising an electrolyte for ion conductance.

13. Separator according to any preceding claim, having a porosity of 15 to 80% and preferably of 20% to 45%.

14. Separator according to any preceding claim, wherein the perforate support comprises polymeric fibers, preferably selected from fibers of polyamide, polyacrylonitrile, polyester and/or polyolefin, glass fibers or ceramic fibers.

15. Separator according to any preceding claim, wherein the support comprises fibers and/or filaments from 1 to 150 $\mu$m and preferably from 1 to 20 $\mu$m in diameter and/or yarn from 3 to 150 $\mu$m and preferably from 10 to 70 $\mu$m in diameter.

16. Separator according to any preceding claim, wherein the support is nonwoven having a pore size from 5 to 500 $\mu$m and preferably from 10 to 200 $\mu$m.

17. Separator according to any preceding claim that is stable under service conditions at not less than 100°C, preferably at not less than 150°C and most preferably at not less than 180°C.

18. Separator according to any preceding claim from 10 to 1 000 $\mu$m, preferably from 10 to 100 $\mu$m and most preferably from 10 to 50 $\mu$m in thickness.

19. Separator according to any preceding claim that tolerates a bending radius down to 100 mm, preferably down to 20 mm and most preferably down to 1 mm.

20. Process for producing a separator for an electrochemical cell according to any of Claims 1 to 19, comprising the steps of:

(a) applying a dispersion as a thin layer onto and into a woven and/or nonwoven, the dispersion comprising

(a1) large ceramic particles whose average particle size provides a pore structure to the layer that is **characterized by** an average pore diameter, and also
(a2) ceramic particles having an average primary particle size which is less than the average particle size of the ceramic particles as per (a1),

(b) solidifying the dispersion at a temperature from 100°C to 680°C to form a first layer of porous ceramic material,
(c) forming one or more interlayers on one side of the first layer of porous ceramic material,
(d) applying a further dispersion to the interlayer of porous ceramic material formed in step (c) which is outermost in relation to the first layer of porous ceramic material, the further dispersion comprising:

(d1) ceramic particles whose particle size provides a pore structure whose average pore size is less than the average pore size of the layer of porous ceramic material that is coated with the dispersion, and
(d2) optionally ceramic particles having an average primary particle size which is less than the average particle size of the ceramic particles as per (d1) and also

(e) solidifying at a temperature from about 100°C to 680°C to form a further layer of porous ceramic material, wherein in step (c) one or more interlayers are formed whose average pore sizes are each smaller than the average pore size of the adjacent layer which is in the direction of the first layer and are greater than the average pore size of the layer which is in the direction of the second layer.

21. Process according to Claim 20, wherein, starting from the first layer in the direction of the second layer assigned an electrode, adjacent layers are formed which each have an average pore size which is from 20 to 50% of the average pore size of the starting layer.

22. Process according to Claim 20 or 21, wherein the ceramic particles comprise a material selected from the group consisting of aluminum oxide, silicon oxide and zirconium oxide or their mixed oxides or mixtures thereof.

23. Process according to any of Claims 20 to 22, wherein the ceramic particles having a small average particle size are producible by hydrolysis and peptization of one or more compounds which are selected from a nitrate, oxynitrate, chloride, oxychloride, carbonate, alkoxide, acetate or acetylacetonate of zirconium, silicon or aluminum.

24. Process according to any of Claims 20 to 23, wherein the surface of particles which form the layers additionally comprise $SiO_2$, $Al_2O_3$, $ZrO_2$ or SiC.

25. Process according to any of Claims 20 to 23, wherein the surface of the particles which form the layers additionally comprise $Li_2CO_3$, $Li_3N$, $LiAlO_3$, or $Li_xAl_yTi_z(PO_4)_3$ where $1 \leq x \leq 2$, $0 \leq y \leq 1$ and $1 \leq z \leq 2$.

26. Process according to any of Claims 20 to 25, wherein the dispersion in step (a) and/or (d) comprises at least one oxide of the elements Al, Zr and/or Si and a sol of at least one of the elements Al, Si and/or Zr.

27. Process according to any of Claims 20 to 26, wherein the woven and/or nonwoven contains fibers which are selected from polyamide, polyacrylonitrile, polyester or polyolefin.

28. Process according to any of Claims 20 to 27, wherein the dispersion is applied by printing on, pressing on, pressing in, rolling on, knifecoating on, spreadcoating on, dipping, spraying or pouring on.

29. Process according to any of Claims 20 to 28, wherein the ceramic particles as per (a2) and/or (d2) are produced by hydrolyzing at least one alkoxide compound of the elements Zr, Al and/or Si or at least one nitrate, carbonate or halide of the elements Zr, Al and/or Si.

30. Process according to any of Claims 20 to 29, wherein the ceramic particles as per (a2) and/or (d2) have an average primary particle size from 7 to 50 nm.

31. Process according to any of Claims 20 to 29, wherein the solidifying is effected at a temperature from 200 to 280°C over 0.5 to 10 minutes.

32. Electrochemical cell, especially a lithium battery, lithium ion battery or a lithium polymer battery, wherein the cell comprises a separator according to any of Claims 1 to 19 which comprises a first layer having an average pore size from 50 to 1 000 nm and at least one further layer having an average pore size from 5 to 400 nm.

33. Use of the separator according to any of Claims 1 to 19 for producing an electrochemical cell, especially a lithium battery, lithium ion battery and/or a lithium polymer battery, each preferably for high current applications.

**Revendications**

1.  Séparateur pour une cellule électrochimique, comprenant

    (A) un support souple, perforé et
    (B) un matériau céramique poreux remplissant les perforations du support,
    le matériau céramique étant approprié pour recevoir un électrolyte guidant les ions,

    le matériau céramique poreux comprenant une première couche poreuse, qui est **caractérisée par** une dimension moyenne de pore, ainsi qu'au moins une deuxième couche poreuse destinée à être mise en contact avec une électrode, la deuxième couche poreuse présentant une dimension moyenne de pore qui est inférieur à la dimension moyenne de pore de la première couche poreuse, une ou plusieurs couches intermédiaires étant situées entre la première et la deuxième couche, dont la dimension moyenne de pore est à chaque fois inférieure à la dimension moyenne de pore de la couche adjacente qui se situe dans le sens orienté vers la première couche et supérieure à la dimension moyenne de pore de la couche qui se situe dans le sens orienté vers la deuxième couche.

2.  Séparateur selon la revendication 1, **caractérisé en ce que** le matériau céramique poreux comprend, sur le côté de la première couche poreuse qui est opposé au côté de la deuxième couche poreuse, une troisième couche poreuse destinée à être la mise en contact avec une électrode de pôle opposé, la troisième couche présentant une dimension moyenne de pore qui est inférieur à la dimension moyenne de pore de la première couche.

3.  Séparateur selon la revendication 1, **caractérisé en ce que** la dimension moyenne de pore de la deuxième et/ou le cas échéant de la troisième couche se situe dans la plage de 0,1 à 50% de la dimension moyenne de pore de la première couche.

4.  Séparateur selon l'une quelconque des revendications précédentes, **caractérisé en ce que** la dimension moyenne de pore de la première couche se situe dans la plage de 80 à 1000 nm, en particulier de 450 à 800 nm.

5.  Séparateur selon l'une quelconque des revendications précédentes, **caractérisé en ce que** la dimension moyenne de pore de la deuxième et/ou le cas échéant de la troisième couche se situe dans la plage de 5 à 250 nm, en particulier de 25 à 150 nm.

6.  Séparateur selon la revendication 2 seule ou en combinaison avec au moins l'une quelconque des revendications 3 à 5, **caractérisé en ce qu'**une ou plusieurs couches intermédiaires sont situées entre la première et la troisième couche, dont la dimension moyenne de pore est à chaque fois inférieure à la dimension moyenne de pore de la couche adjacente qui se situe dans le sens orienté vers la première couche et supérieure à la dimension moyenne de pore de la couche qui se situe dans le sens orienté vers l'électrode associée à ce côté.

7.  Séparateur selon l'une quelconque des revendications précédentes, des couches adjacentes, partant de la première couche dans le sens orienté vers la deuxième et/ou le cas échéant la troisième couche associée(s) à une électrode, présentant à chaque fois une dimension moyenne de pore qui représente 20 à 50% de la dimension moyenne de pore de la couche de départ.

8.  Séparateur selon l'une quelconque des revendications précédentes, le matériau céramique poreux comprenant un oxyde de zirconium, de silicium et/ou de préférence d'aluminium.

9.  Séparateur selon l'une quelconque des revendications précédentes, le matériau céramique pouvant être préparé par solidification d'une barbotine qui contient des particules présentant une grande grosseur moyenne de particule, qui déterminent la structure des pores du matériau céramique, ainsi que des particules présentant une petite grosseur moyenne de particule, qui font adhérer les grosses particules lors de la solidification de la barbotine.

10. Séparateur selon la revendication 9, la surface des particules qui forment les couches comprenant en outre $SiO_2$, $Al_2O_3$, $ZrO_2$ ou $SiC$.

11. Séparateur selon l'une quelconque des revendications précédentes, les couches comprenant $Li_2CO_3$, $Li_3N$, $LiAlO_3$ ou $Li_xAl_yTi_z(PO_4)_3$ où $1 \leq x \leq 2$, $0 \leq y \leq 1$ et $1 \leq z \leq 2$.

12. Séparateur selon l'une quelconque des revendications précédentes, qui comprend un électrolyte pour guider les ions.

**13.** Séparateur selon l'une quelconque des revendications précédentes, le séparateur présentant une porosité de 15 à 80%, de préférence de 20 à 45%.

**14.** Séparateur selon l'une quelconque des revendications précédentes, le support perforé comprenant des fibres polymères, de préférence choisies parmi les fibres en polyamide, en polyacrylonitrile, en polyester et/ou en polyoléfine, les fibres de verre ou les fibres céramiques.

**15.** Séparateur selon l'une quelconque des revendications précédentes, le support comprenant des fibres et/ou des filaments présentant un diamètre de 1 à 150 $\mu$m, de préférence de 1 à 20 $\mu$m et/ou des fils présentant un diamètre de 3 à 150 $\mu$m, de préférence de 10 à 70 $\mu$m.

**16.** Séparateur selon l'une quelconque des revendications précédentes, le support étant un non-tissé présentant une largeur de pore de 5 à 500 $\mu$m, de préférence de 10 à 200 $\mu$m.

**17.** Séparateur selon l'une quelconque des revendications précédentes, qui est stable, dans des conditions d'utilisation, à au moins 100°C, de préférence à au moins 150°C et de manière tout particulièrement préférée à au moins 180°C.

**18.** Séparateur selon l'une quelconque des revendications précédentes, qui présente une épaisseur dans la plage de 10 à 1000 $\mu$m, de préférence de 10 à 100 $\mu$m, de manière tout particulièrement préférée de 10 à 50 $\mu$m.

**19.** Séparateur selon l'une quelconque des revendications précédentes, qui tolère un rayon de courbure de jusqu'à 100 mm, de préférence de jusqu'à 20 mm, de manière tout particulièrement préférée de jusqu'à 1 mm.

**20.** Procédé pour la fabrication d'un séparateur pour une cellule électrochimique selon l'une quelconque des revendications 1 à 19, comprenant les étapes suivantes :

(a) application d'une dispersion sous forme d'une couche mince sur et dans un tissu et/ou un non-tissé, la dispersion comprenant

(a1) des grosses particules céramiques dont la grosseur moyenne de particule met à disposition une structure poreuse de la couche qui est **caractérisée par** un diamètre moyen de pore ainsi que
(a2) des particules céramiques présentant une grosseur moyenne de particule primaire inférieure à la grosseur moyenne des particules céramiques selon (a1),

(b) solidification de la dispersion à une température de 100°C à 680°C pour réaliser une première couche en matériau céramique poreux,
(c) réalisation d'une ou de plusieurs couches intermédiaires sur un côté de la première couche en matériau céramique poreux,
(d) application d'une autre dispersion sur la couche intermédiaire en matériau céramique poreux, réalisée dans l'étape (c), la plus externe par rapport à la première couche en matériau céramique poreux, l'autre dispersion comprenant :

(d1) des particules céramiques dont la grosseur de particule met à disposition une structure poreuse dont la dimension moyenne de pore est inférieure à la dimension moyenne de pore de la couche en matériau céramique poreux qui est revêtue par la dispersion et
(d2) le cas échéant des particules céramiques présentant une grosseur moyenne de particule primaire inférieure à la grosseur moyenne des particules céramiques selon (d1),

(e) solidification à une température d'environ 100°C à 680°C pour réaliser une autre couche en matériau céramique poreux,
une ou plusieurs couches intermédiaires étant réalisées dans l'étape (c) dont la dimension moyenne de pore est à chaque fois inférieure à la dimension moyenne de pore de la couche adjacente qui se situe dans le sens orienté vers la première couche et supérieure à la dimension moyenne de pore de la couche qui se situe dans le sens orienté vers la deuxième couche.

**21.** Procédé selon la revendication 20, des couches adjacentes, partant de la première couche dans le sens orienté vers la deuxième couche associée à une électrode, étant réalisées, présentant à chaque fois une dimension moyenne de pore qui représente 20 à 50% de la dimension moyenne de pore de la couche de départ.

**22.** Procédé selon la revendication 20 ou 21, les particules céramiques comprenant un matériau qui est choisi dans le groupe constitué par l'oxyde d'aluminium, l'oxyde de silicium et l'oxyde de zirconium ou par leurs oxydes mixtes ou leurs mélanges.

**23.** Procédé selon l'une quelconque des revendications 20 à 22, les particules céramiques présentant une petite grosseur moyenne de particule pouvant être préparées par hydrolyse et peptisation d'un ou de plusieurs composés, qui sont choisis parmi un nitrate, un oxynitrate, un chlorure, un oxychlorure, un carbonate, un alcoolate, un acétate ou un acétylacétonate de zirconium, de silicium ou d'aluminium.

**24.** Procédé selon l'une quelconque des revendications 20 à 23, la surface des particules qui forment les couches comprenant en outre $SiO_2$, $Al_2O_3$, $ZrO_2$ ou SiC.

**25.** Procédé selon l'une quelconque des revendications 20 à 23, la surface des particules qui forment les couches comprenant en outre $Li_2CO_3$, $Li_3N$, $LiAlO_3$ ou $Li_xAl_yTi_z(PO_4)_3$ où $1 \leq x \leq 2$, $0 \leq y \leq 1$ et $1 \leq z \leq 2$.

**26.** Procédé selon l'une quelconque des revendications 20 à 25, la dispersion dans l'étape (a) et/ou (d) présentant au moins un oxyde des éléments Al, Zr et/ou Si et un sol d'au moins un des éléments Al, Si et/ou Zr.

**27.** Procédé selon l'une quelconque des revendications 20 à 26, le tissu et/ou le non-tissé contenant des fibres qui sont choisies parmi le polyamide, le polyacrylonitrile, le polyester ou la polyoléfine.

**28.** Procédé selon l'une quelconque des revendications 20 à 27, la dispersion étant appliquée par impression, par compression, par pressage, au cylindre, par raclage, par enduction, par trempage, par pulvérisation ou par coulage.

**29.** Procédé selon l'une quelconque des revendications 20 à 28, au moins un composé de type alcoolate des éléments Zr, Al et/ou Si ou au moins un nitrate, un carbonate ou un halogénure choisi des éléments Zr, Al et/ou Si, étant hydrolysé pour la préparation des particules céramiques selon (a2) et/ou (d2).

**30.** Procédé selon l'une quelconque des revendications 20 à 29, les particules céramiques selon (a2) et/ou (d2) présentant une grosseur moyenne de particule primaire de 7 à 50 nm.

**31.** Procédé selon l'une quelconque des revendications 20 à 29, la solidification ayant lieu pendant 0,5 à 10 minutes à une température de 200 à 280°C.

**32.** Cellule électrochimique, en particulier pile au lithium, batterie lithium-ion ou une batterie lithium-polymère, la cellule comprenant un séparateur selon l'une quelconque des revendications 1 à 19, qui présente une première couche présentant une dimension moyenne de pore de 50 à 1000 nm et au moins une autre couche présentant une dimension moyenne de pore de 5 à 400 nm.

**33.** Utilisation d'un séparateur selon l'une quelconque des revendications 1 à 19 pour la fabrication d'une cellule électrochimique, en particulier d'une batterie au lithium, d'une batterie lithium-ion ou d'une batterie lithium-polymère, à chaque fois de préférence pour des utilisations à courant élevé.

Fig. 1A

Fig. 1B

Fig. 2A

Fig. 2B

Fig. 3A

Fig. 3B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19838800 C1
- DE 10142622
- DE 10208277
- DE 10115918
- DE 10115927
- WO 9915262 A
- WO 9962624 A

**In der Beschreibung aufgeführte Nicht-Patentliteratur**

- **D. KNITTEL ; E. SCHOLLMEYER.** *Melliand Textilber.,* 1998, vol. 79 (5), 362-363
- **E. W. WASHBURN.** Note on a Method of Determining the Distribution of Pore Sizes in a Porous Material. *Proc. Natl. Acad. Sci.,* 1921, vol. 7, 115-16
- **G. VENUGIOPAL.** *J. of Power Sources,* 1999, vol. 77, 34-41